Europäisches Patentamt

European Patent Office

Office européen des brevets

(19)

(11) **EP 1 536 362 A1**

(12) **EUROPEAN PATENT APPLICATION**

(43) Date of publication:
**01.06.2005 Bulletin 2005/22**

(51) Int Cl.$^7$: **G06F 17/60**, H04N 7/173

(21) Application number: **04026800.5**

(22) Date of filing: **11.11.2004**

| (84) Designated Contracting States:<br>**AT BE BG CH CY CZ DE DK EE ES FI FR GB GR HU IE IS IT LI LU MC NL PL PT RO SE SI SK TR**<br>Designated Extension States:<br>**AL HR LT LV MK YU** | (72) Inventor: **Itoh, Naoto, Pioneer Corporation Tsurugashima-shi Saitama-ken (JP)** |
|---|---|
| (30) Priority: **26.11.2003 JP 2003396041** | (74) Representative: **Grünecker, Kinkeldey, Stockmair & Schwanhäusser Anwaltssozietät Maximilianstrasse 58 80538 München (DE)** |
| (71) Applicant: **Pioneer Corporation Tokyo-to (JP)** | |

(54) **Information recording-reproducing terminal unit, advertising information distribution server, advertising information distribution system, advertising information distribution method, contents data reproducing program, advertising information distribution program and information recording medium**

(57)    An object of the invention is to make sound propaganda advertisement in reproducing the contents data recorded in a recording-reproducing apparatus. The recording-reproducing apparatus (RC-k) records and reproduces the contents data broadcast by a broadcasting installation (BE). Such recording-reproducing apparatus (RC-k) downloads the replacement advertising information for replacing the original advertising information incorporated into the contents data from a management server (CS) in reproducing the contents data recorded in the self machine. At this time, the management server (CS) selects the replacement advertising information, based on the advertisement story pattern data indicating the advertisement substance, and the story pattern data indicating the substance of contents conforming to the preference of the user of the recording-reproducing apparatus (RC-k), and distributes the replacement advertising information to the recording-reproducing apparatus (RC-k). The recording-reproducing apparatus (RC-k) replaces the original advertising information with the distributed replacement advertising information to reproduce the contents data.

FIG. 1

EP 1 536 362 A1

**Description**

BACKGROUND OF THE INVENTION

1.Field of the Invention

The present invention relates to a system for recording and reproducing the contents data, and more particularly to a technique for replacing the advertising information during reproduction of the contents data.

2.Related Art

In the recent computerized society, it is very meaningful for the company to make the propaganda advertising activities for the products made by the company. Therefore, each company is engaged in the propaganda advertising activities using the broadcasting media such as television by investing large amounts of propaganda advertising expenses. Various kinds of advertising information are incorporated into the contents data reflecting such industrial structures and broadcast in our country at present.

On the other hand, an invention for appending the advertising information to the contents data recorded in the package media has been proposed as a part of the technologies for promoting such propaganda advertising activities (e.g., refer to Patent Document 1: Japanese Patent Laid-Open No. 2003-87747)

By the way, nowadays, a recording-reproducing apparatus such as a hard disk recorder (hereinafter "hard disk" is abbreviated as "HD") or a DVD recorder has wide spread. The broadcast contents data may not be often viewed in real time at the broadcast date and time, and the company making the propaganda advertising activities may not possibly withdraw the self-investment fully. Particularly, when the product of advertisement object is highly prevalent, or so-called seasonable, there is a significant trend as above.

On the other hand, the above prior art (refer to patent document 1) may be applied to the contents data recorded on the recording-reproducing apparatus after broadcasting. However, the same invention is only a technique for reproducing the downloaded advertising information at a predetermined timing during reproduction of the contents data. Therefore, the sponsor can not manage the term of validity for the propaganda advertising substance, and when the incorporated advertising information does not conform to the user's preference, the propaganda advertising effect as intended by the sponsor can not be attained in some cases.

SUMMARY OF THE INVENTION

This invention has been achieved in the light of the above-mentioned problems, and it is an object of the invention to provide an information recording-reproducing terminal unit, an advertising information distribution server, an advertising information distribution system, an advertising information distributionmethod, a contents data reproduction program, an advertising information distribution program and an information recording medium in which there is a sound propaganda advertising effect in reproducing the contents data recorded on the recording-reproducing apparatus, and particularly a propaganda advertising effect as intended by the sponsor.

The above object of the present invention can be achieved by an information recording-reproducing terminal unit of the present invention. The information recording-reproducing terminal unit is provided with: a receiving device which receives the contents data incorporating at least the first advertising information indicating the advertisement substance and the first advertisement attribute information indicating an attribute of the first advertising information; a contents data recording device which records the contents data received by the receiving device; a reproduction device which reproduces the contents data recorded in the contents data recording device; a determination device which determines whether or not replacement of the first advertising information included in the contents data is required, based on at least one attribute information of the first advertisement attribute information incorporated into the contents data and the user attribute information indicating the attribute of the user on a self machine in reproducing the contents data; and an advertising information acquirement device which acquires the second advertising information different from the first advertising information from the outside, when the determination device determines that replacement of the first advertising information is required; wherein when the determination device determines that replacement of the first advertising information is required, and when the second advertising information is acquired by the advertising information acquirement device, the reproduction device reproduces the contents data by replacing the first advertising information incorporated into the contents data with the second advertising information.

According to the present invention, only when replacement of the original advertising information is required, the replacement advertising information to replace the original advertising information is downloaded, and the contents data after replacement is reproduced in the recording-reproducing apparatus. Therefore, it is possible to make the appropriate propaganda-advertisement, thereby attaining the propaganda-advertisement effect intended by the sponsor, even when the original advertising information incorporated into the contents data recorded on the recording-reproducing apparatus is reproduced at inappropriate reproduction time.

In one aspect of the present invention can be achieved by the information recording-reproducing terminal unit of the present invention. The information recording-reproducing terminal unit of the present invention is, wherein the receiving device receives at least one of the broadcast date and time of the contents data and the minimum number of reproducing the contents data as the first advertisement attribute information, and the determination device determines whether or not replacement of the first advertising information included in the contents data is required, based on at least one of the first advertisement attribute information and the attribute information indicating the attribute of the user on the self machine.

According to the present invention, a recording-reproducing apparatus receives an advertisement attribute data including at least one of broadcast date and time of contents data and minimum looking and listening number of the contents data, and determines whether or not replacement of original advertising information included in the contents data is required, based on the data. That is, with this constitution, it is possible to set up the description substance of the advertisement attribute data while reflecting the intention of a sponsor at the time of broadcasting.

In another aspect of the present invention can be achieved by the information recording-reproducing terminal unit of the present invention. The information recording-reproducing terminal unit of the present invention is, wherein the first advertisement attribute information includes the replacement possibility information indicating whether or not to replace the first advertising information, and the determination device determines that replacement of the first advertisement data is required when replacement of the first advertising information is permitted based on the replacement possibility information.

According to the present invention, a recording-reproducing apparatus determines that the replacement of original advertising information is required, if the replacement of original advertising information is permitted with a replacement possibility flag included in the advertisement attribute data. With this constitution, only of the replacement of the original advertising information is permitted with the replacement possibility flag, the replacement of the original advertising information is performed, whereby the replacement of the original advertising information can be made to the wishes of a sponsor at the time of broadcasting.

In further aspect of the present invention can be achieved by the information recording-reproducing terminal unit of the present invention. The information recording-reproducing terminal unit according of the present invention is further provided with an edit data acquirement device for acquiring the edit data from the outside.

According to the present invention, a recording-reproducing apparatus of this application example downloads a contents edit data from a management server. Therefore, the contents edit data generated in other recording-reproducing apparatuses can be utilized.

The above obj ect of the present invention can be achieved by an advertising information distribution server of the present invention. The advertising information distribution server in an advertising information distribution system having an information recording-reproducing terminal unit which reproduces the contents data by receiving the contents data incorporating the first advertising information indicating the advertisement substance, while acquiring the second advertising information different from the first advertising information and replacing the first advertising information with the second advertising information in certain cases, the server is provided with: a first recording device which records a plurality of second advertising information; a second recording device which records the advertisement substance information indicating the advertisement substance corresponding to the second advertising information and corresponding to each of the second advertising information recorded in the first recording device; an acquirement device which acquires the history information indicating the reproduction history of the contents data in the information recording-reproducing terminal unit and including the contents substance information indicating the contents substance corresponding to the contents data from the information recording-reproducing terminal unit receiving the contents data; a selection device which selects at least one of the second advertising information based on both the history information and the advertisement substance information; and an advertising information distribution device which distributes the second advertising information selected by the selection device to the information recording-reproducing terminal unit.

According to the present invention, replacement advertising information having an advertisement substance conforming to an user's preference is distributed from a management server to a recording-reproducing apparatus. Therefore, it is possible to draw an interest of the user who viewed the advertisement corresponding to a distributed replacement advertising information and attain a propaganda-advertisement effect intended by a sponsor.

In one aspect of the present invention can be achieved by the advertising information distribution server of the present invention. The advertising information distribution server of the present invention is, wherein the second recording device records, as the advertisement substance information, the information indicating an appearance probability that at least one of a character and a setting location appearing on the advertisement corresponding to the second advertising information appears at any point of time in the advertisement, and the acquirement device acquires, as the contents substance information included in the history information, the information indicating an appearance probability that at least one of a character and a setting location appearing on the contents corresponding to the contents data appears at any point of time in the progress of a story of the contents, and the selection device selects at least one of the second advertising information based on both the history information and the advertisement substance information.

According to the present invention, since replacement advertising information is selected based on a data objectively indicating a substance of the contents that is a story pattern data, the replacement advertising information is selected according to an user's preference.

In another aspect of the present invention can be achieved by the advertising information distribution server of the present invention. The advertising information distribution server of the present invention of the present invention is, wherein the selection device calculates a difference between the appearance probability corresponding to the contents substance information included in the history information and the appearance probability included in the advertisement substance information, and selects the second advertising information based on the difference.

According to the present invention, since replacement advertising information is selected based on an objective criterion, the replacement advertising information is selected conforming to an user's preference.

In further aspect of the present invention can be achieved by the advertising information distribution server of the presentinvention. Theadvertisinginformationdistribution server of the present invention is further provided with: a questionnaire data distribution device which generates the questionnaire data indicating the questionnaire substance for the advertisement substance of the second advertising information and distributing the questionnaire data to the information recording-reproducing terminal unit; and a result data acquirement device which acquires the result data corresponding to a questionnaire result answered by the user of the information recording-reproducing terminal unit in accordance with the questionnaire data.

According to the present invention, a management CS of the present invention is constituted to generate the data indicating an questionnaire substance for an advertisement substance of an advertising information and distribute the data to a recording-reproducing apparatus, and acquire the data corresponding to the questionnaire result answered by an user of the recording-reproducing apparatus in accordance with the data. With this constitution, since the questionnaire result for each replacement advertising information is acquired, the questionnaire result is fed back to a sponsor.

In further aspect of the present invention can be achieved by the advertising information distribution server of the present invention. The advertising information distribution server of the present invention is further provided with: a third recording device which records relationally the identification information for identifying the user of the information recording-reproducing terminal unit and the point data corresponding to a monetary value; and a point data writing device which writes in the third recording device the point data having a higher monetary value than the point data already recorded in the third recording device, when at least the result data is acquired.

According to the present invention, a management server of the present invention stores a user ID for identifying the user of a recording-reproducing apparatus and points corresponding to monetary value to be associated with in meta data. When the data at least corresponding to a questionnaire result is acquired, the higher points in the monetary value than the points already recorded in the meta data are written in the meta data. With this constitution, the points are added corresponding to each user ID, and the service in accordance with the points is provided to the user, whereby the withdrawal ratio of questionnaire answer is raised.

In further aspect of the present invention can be achieved by the advertising information distribution server of the present invention. The advertising information distribution server of the present invention is further provided with an edit data distribution device which distributes the edit data to the information recording-reproducing terminal unit.

According to the present invention, if contents edit data is uploaded, a user management part of a management server stores the contents edit data in the contents edit Database. At this time, the user management part stores the contents edit data in the field corresponding to a user ID. And the user management part distributes the contents edit data stored in the contents edit Database in response to a distribution request from a recording-reproducing apparatus. Thereby, an advertising information distribution system according allows the edit substance of the contents data that is made by one user to be shared among all the users.

In further aspect of the present invention can be achieved by the advertising information distribution server of the present invention. The advertising information distribution server of the present invention is further provided with: a third recording device which records relationally the identification information for identifying the user of the information recording-reproducing terminal unit and the point data corresponding to a monetary value; a first point data writing device which writes in the third recording device the point data having a higher monetary value than the point data already recorded in the third recording device, when at least the result data is acquired; and a second point data writing device which writes in the third recording device the point data having a lower monetary value than the point data already recorded in the third recording device, when the edit data is distributed.

According to the present invention, a management server of this application example records relationally a user ID for identifying the user of the recording-reproducing apparatus and the points corresponding to the monetary value in meta data. When the data at least corresponding to a questionnaire result is acquired, the higher points in the monetary value than the points already recorded in the meta data are written. When the contents edit data is distributed, the lower points in the monetary value than the points already recorded in the meta data are written. With this constitution, the withdrawal ratio of questionnaire answer is raised, and a new service form of distributing the contents edit data is implemented.

The above object of the present invention can be achieved by an advertising information distribution system of the present invention. The advertising information distribution system including an advertising information distribution server accommodated in a network and an information recording-reproducing terminal unit, the information recording-reproducing terminal unit is provided with: a receiving device which receives the contents data incorporating at least the first advertising information indicating the advertisement substance and the first advertisement attribute information indicating an attribute of the first advertising information; a contents data recording device which records the contents data received by the receiving device; a reproduction device which reproduces the contents data recorded in the contents data recording device; a determination device which determines whether or not replacement of the first advertising information included in the contents data is required, based on at least one attribute information of the first advertisement attribute information incorporated into the contents data and the user attribute information indicating the attribute of the user on a self machine in reproducing the contents data; and an advertising information acquirement device which acquires the second advertising information different from the first advertising information from the advertising information distribution server when the determination device determines that replacement of the first advertising information is required; wherein when the determination device determines that replacement of the first advertising information is required, and when the second advertising information is acquired by the advertising information acquirement device, the reproduction device reproduces the contents data by replacing the first advertising information incorporated into the contents data with the second advertising information; and the advertising information distribution server comprises an advertising information recording device which records a plurality of second advertising information different from the first advertising information, and an advertising information distribution device which distributes the second advertising information to the information recording-reproducing terminal unit for recording and reproducing the information.

According to the present invention, a recording-reproducing apparatus of this application example edits a contents data, generates a contents edit data indicating a substance of the edit, and transmits the contents edit data to a management server. Also, the management server of this application example acquires the contents data edit data generated in the recording-reproducing apparatus, and records the acquired contents edit data. With this constitution, the contents edit data is shared among all the recording-reproducing apparatuses accommodated within an advertising information distribution system, allowing the unitary management of the contents edit data to be made.


BRIEF DESCRIPTION OF THE DRAWINGS

FIG. 1 is a block diagram showing the configuration of an advertising information distribution system 1 according to a first embodiment of the invention;
FIG. 2 is a table showing the substance of a figure pattern generation table TBL1 according to this embodiment;
FIG. 3 is a view showing the experimental calculation result of A matrix according to this embodiment;
FIG. 4 is a view showing the experimental calculation result of U matrix according to this embodiment;
FIG. 5 is a table showing the substance of a location pattern generation table TBL2 according to this embodiment;
FIG. 6 is a diagram showing the data format of the contents data according to this embodiment;
FIG. 7 is a diagram showing the data format of broadcasting station generation meta data a according to this embodiment;
FIG. 8 is a block diagram showing the configuration of a recording-reproducing apparatus RC-k according to this embodiment;
FIG. 9 is a diagram showing the data format of system generation meta data b according to this embodiment;
FIG. 10 is a diagram showing the data format of title data b-1 according to this embodiment;

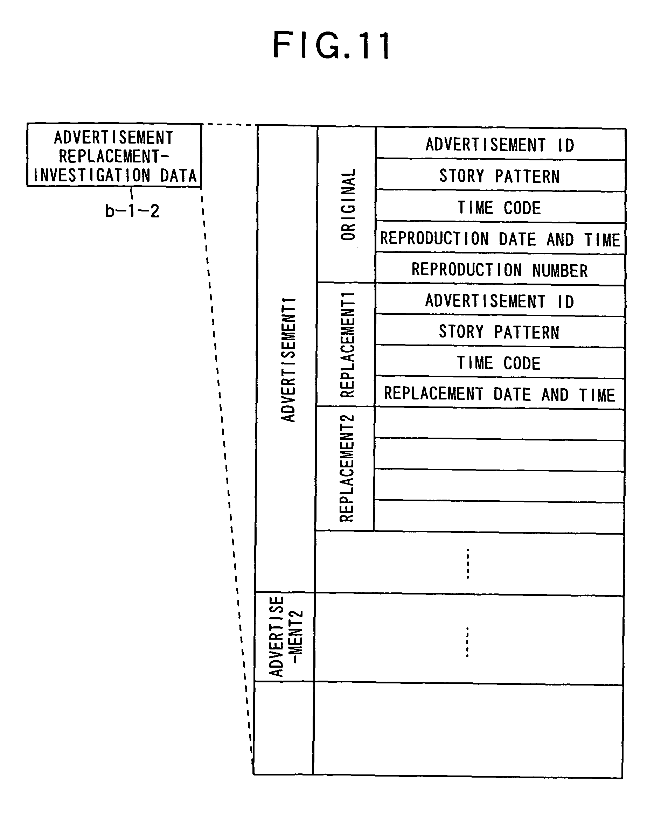

FIG. 11 is a diagram showing the data format of advertisement replacement-investigation data b-2 according to this embodiment;
FIG. 12 is a diagram showing the data format of data b-2 according to this embodiment;
FIG. 13 is a block diagram showing the configuration of a management server CS according to this embodiment;
FIG. 14 is a table showing one example of the recorded substance of an advertising information DB14 according to this embodiment;
FIG. 15 is a diagram showing the data format of advertisement meta data according to this embodiment;
FIG. 16 is a table showing one example of the recorded substance of a user management DB151 according to this embodiment;

FIG. 17 is a table showing one example of the recorded substance of an advertisement replacement-investigation DB153 according to this embodiment;

FIG. 18 is a table showing one example of the recorded substance of an advertisement story pattern DB152 according to this embodiment;

FIG. 19 is a flowchart showing the procedure performed by a system control part 207 in the recording-reproducing apparatus RC-k according to this embodiment;

FIG. 20 is a flowchart showing the procedure performed by the system control part 207 in the recording-reproducing apparatus RC-k according to this embodiment;

FIG. 21 is a flowchart showing the procedure performed by the system control part 207 in the recording-reproducing apparatus RC-k according to this embodiment;

FIG. 22 is a flowchart showing the procedure performed by the system control part 207 in the recording-reproducing apparatus RC-k according to this embodiment;

FIG. 23 is a flowchart showing the procedure performed by the system control part 207 in the recording-reproducing apparatus RC-k according to this embodiment;

FIG. 24 is a flowchart showing the procedure performed by a replacement advertising information distribution part 112 in the management server CS according to this embodiment;

FIG. 25 is a diagram showing the data format of point management data b-1-3 according to a second embodiment;

FIG. 26 is a table showing one example of the recorded substance of a point management DB according to this embodiment;

FIG. 27 is a diagram showing the data format of contents edit data b-1-4 in an application example;

FIG. 28 is a table showing one example of the recorded substance of a contents edit DB in the application example;

FIG. 29 is a table showing one example of the recorded substance of a management table TBL3 in the application example;

FIG. 30 is a flowchart showing the procedure performed by the system control part 207 in the recording-reproducing apparatus RC-k in the application example; and

FIG. 31 is a flowchart showing the procedure performed by the system control part 207 in the recording-reproducing apparatus RC-k in the application example.

DETAILED DESCRIPTION OF THE PREFERRED EMBODIMENTS

The preferred embodiments of the present invention will be described below with reference to the accompanying drawings. This invention is not limited by those embodiments, but various modifications may be made within the scope of technology or concept of this invention.

[1] First embodiment

[1.1] Configuration of first embodiment

(1) Overall system configuration

(1-1) Outline

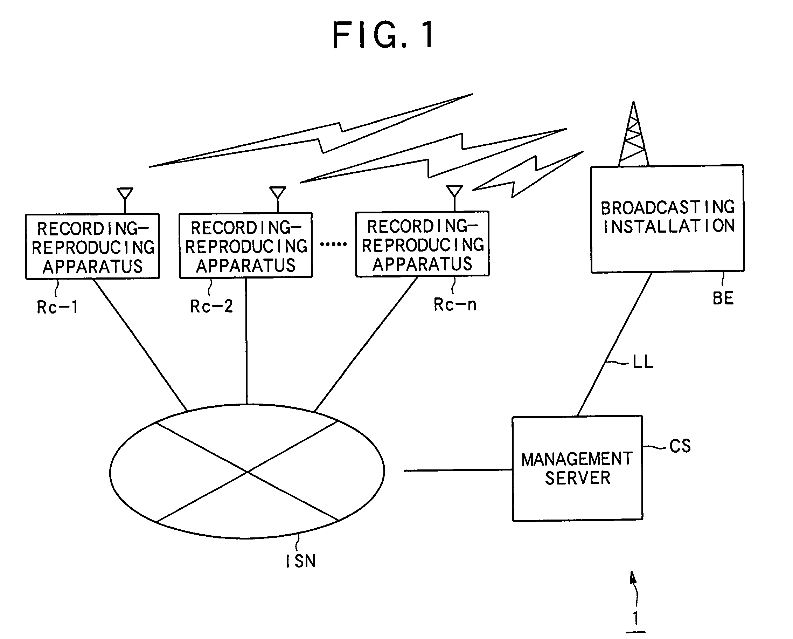

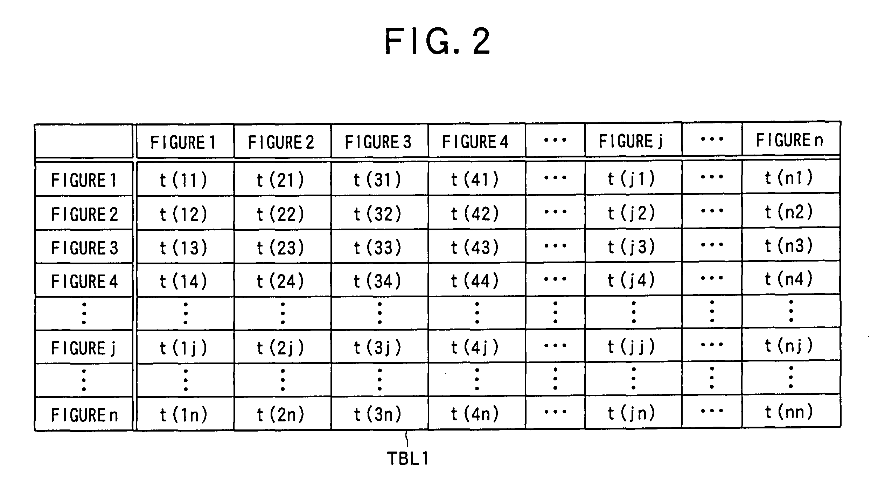

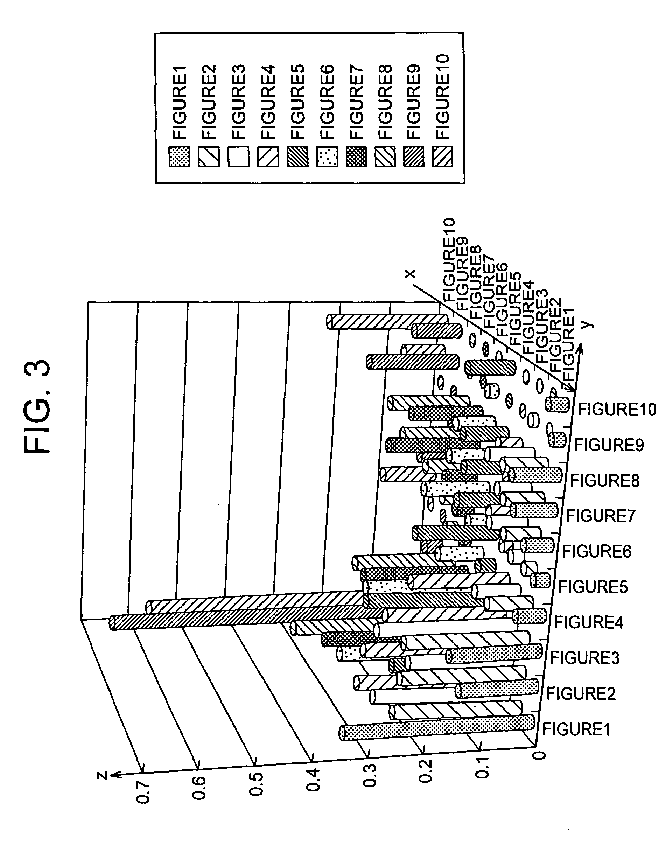

Referring to FIG. 1, first of all, the configuration of an advertising information distribution system according to a first embodiment of the invention will be described below. FIG. 1 is a block diagram showing the configuration of the advertising information distribution system according to this embodiment.

The advertising information distribution system 1 according to this embodiment comprises a recording-reproducing apparatus RC-k (k=1, 2, ..., n) owned by the user, a broadcasting installation BE, a management server CS, a public digital network ISN, and a private line LL interconnecting the broadcasting installation BE and the management server CS, as shown in FIG. 1. In FIG. 1, though there are a plurality of recording-reproducing apparatuses, a predetermined number of recording-reproducing apparatuses RC-k are only shown to prevent the drawing from being complex. For example, the recording-reproducing apparatus RC-k of this embodiment constitutes an "information recording-reproducing terminal unit" of this invention, and the management server CS constitutes an "advertising information distribution server".

This advertising information distribution system 1 realizes the following issues. That is,

i) Broadcasting the broadcast wave containing the contents data incorporating the advertising information from the broadcasting installation BE.

ii) Receiving this broadcast wave in the recording-reproducing apparatus RC-k, and recording the contents data contained in the broadcast wave. At this time, the recording-reproducing apparatus RC-k generates the story pattern data indicating the substance of the contents data. This story pattern data will be described below.

iii) In reproducing the contents data recorded on the recording-reproducing apparatus RC-k, the recording-reproducing apparatus RC-k downloads the advertising information for replacement to replace the advertising information from the management server CS, if the propaganda-advertisement effect of the advertising information is not expected because a certain period of time has passed after recording the contents data. At this time, the management server CS decides the advertising information to be distributed to the recording-reproducing apparatus RC-k, based on the story pattern data generated in the recording-reproducing apparatus RC-k and the story pattern data indicating the substance of advertising information (hereinafter referred to as "advertisement story pattern data"). In the following, the advertising information incorporated into the contents data and broadcast at the broadcast date and time is called original advertising information, and the advertising information to be replaced with the original advertising information in the recording-reproducing apparatus RC-k is called replacement advertising information. The advertising information simply means both of them.

iv) The recording-reproducing apparatus RC-k reproduces the contents data by replacing the original advertising information with the replacement advertising information downloaded from the management server CS.

A specific configuration of this system 1 will be described later.

(1-2) Story pattern data

Firstly, the story pattern data will be described.

The story pattern data means the data indicating the substance of contents corresponding to each contents data, or the advertisement substance corresponding to the advertising information, and is composed of the story pattern data corresponding to the dramatis personae (hereinafter "figure pattern data") and the story pattern data corresponding to the location of appearance (hereinafter "location pattern data"). In this specification, to help the understandings, both the contents data and the advertising information are also called the contents data.

First of all, the figure pattern data is the data indicating the probability that the figure or character appearing in the contents corresponding to each contents data appears in each frame, and decided depending on the number of frames in which each figure appears. On the other hand, the location pattern data is the data indicating the probability that the location on the stage in the contents appears in each frame, and decided depending on the number of frames in which each location is on the stage.

A method for generating this story pattern data will be described below.

[Story pattern data generation method]

<Figure pattern data generation method>

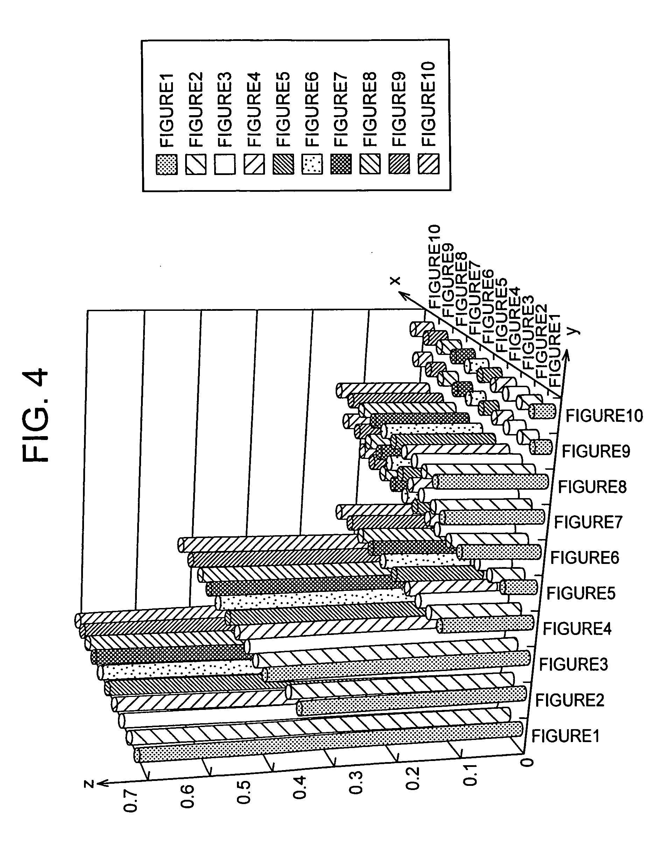

The figure pattern data is generated based on a figure pattern generation table TBL1 as shown in FIG. 2. FIG. 2 is a table showing the substance of the figure pattern generation table TBL1 in this embodiment.

In FIG. 2, the row and column signify the figure name extracted through the above process, viz., the figure name appearing in the contents corresponding to the contents data. Accordingly, n persons of "figure 1", "figure 2", "figure 3", ... "figure n" appear in the contents in an example as shown in FIG. 2.

Also, a counter is provided in the field crossed in each row and each column of the figure pattern generation table TBL1. The figure pattern generation table TBL1 is updated by incrementing the counter.

More specifically, the figure pattern generation table TBL1 is updated through the following procedure.

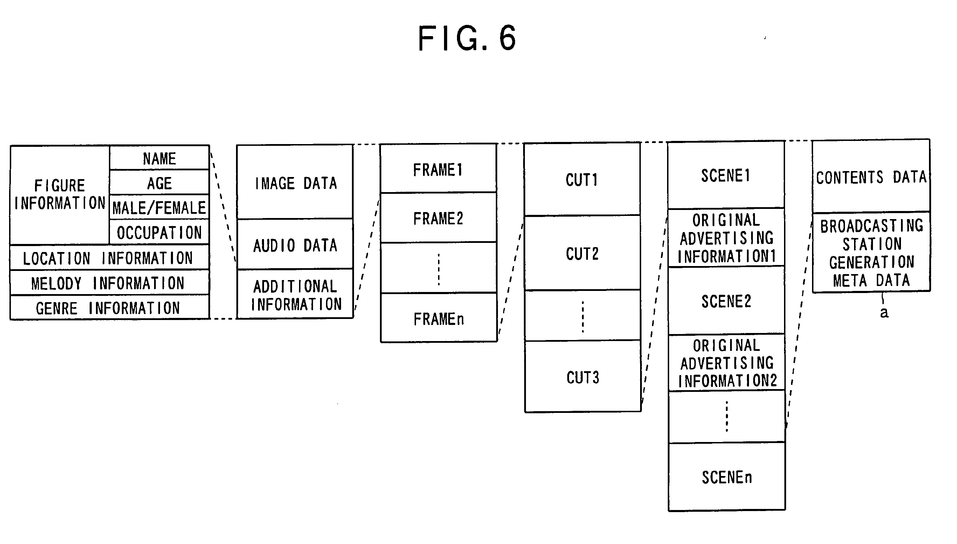

Firstly, the figure name included in the figure information as shown in FIG. 6 is extracted in sequence from the start frame of the contents data from which the figure pattern data is generated, and the counter in the field crossed in the row and column corresponding to the figure name is incremented.

The figure information is included in the additional information making up the contents data, and indicates the attribute such as figure name of dramatis personae appearing in each frame. The figure information will be described later in a paragraph for explaining the broadcasting installation BE.

In incrementing the counter,

(i) When one person appears within the frame
For example, when the dramatis personae is "figure 1" alone, counter for t(11) is incremented by "1" in the figure pattern generation table TBL1.
(ii) When plural persons appear within the frame
For example, when the dramatis personaes are "figure 1" and "figure 2", each of the counters for t(11), t(22), t(12) and t(21) is incremented by "1" in the figure pattern generation table TBL1.

This procedure is performed sequentially until the final frame, so that the figure pattern generation table TBL1 is updated. Since the figure pattern generation table TBL1 is updated through this procedure, the counter stored in each field of the table TBL1 indicates a) the total number of appearance frames in which each dramatis personae appears in the contents, and b) the number of frames in which the dramatis personae appears within the same frame as other dramatis personaes.

The number of frames signifies the time length occupied in the contents corresponding to the contents data, and accordingly corresponds to a) the total appearance time length in which each dramatis personae appears in the contents, and b) the time length for which the dramatis personae appears within the same frame as other dramatis personaes.

Through the above process, each counter value "t (ij ) " stored in the updated figure pattern generation table TBL1 is substituted for the following formula 1.

[Formula 1]

$$T t (j) = \sum_{i=1}^{n} t (ij) \qquad (j{=}1,2,......n)$$

Where the right side in expression 1 is a sumof numerical values in the row direction of the figure pattern generation table TBL1, and signifies the total number of appearance frames in which "figure j" appears.

Then, a(ij) is calculated by substituting the calculation result Tt(ij) of expression 1 for expression 2, and matrix "A" as shown in expression 3 is calculated based on the calculation result of a(ij), so that the data corresponding to matrix "A" is generated.

[Formula 2]

$$a\,(ij) = t\,(ij)/T\,t\,(j) \qquad (i,j{=}1,2.....,n)$$

[Formula 3]

$$A = \begin{pmatrix} a(11) & \cdots & a(n1) \\ \cdot & & \cdot \\ \cdots & a(ij) \cdots & \cdot \\ a(1n) & \cdots & a(nn) \end{pmatrix}$$

Each parameter a(ij) of matrix "A" signifies the percentage of the number of simultaneous appearance frames of "figure i" and "figure j" to the total number of appearance frames of "figure j", viz., the probability that "figure j" appear on the same frame as "figure i". Hence, a(ij) (i=1, 2, ..., n) corresponding to "figure j" are in the following relation as shown in expression 4.

[Formula 4]

$$\sum_{i=1}^{n} a\,(ij) = 1 \qquad (j{=}1,2,........,n)$$

A matrix obtained through the above generation process represents a transition probability matrix in the Markov chain. The transition probability matrix in the Markov chain has the converged values (stationary distribution), when the value of k is made infinitive ($\infty$) in the following transformation expression 5. However, since the transition probability matrix is empirically substantially converged when the value of k is "30" or more, the value of "k" is set to "30" or more in this embodiment. It is well known that in the Markov chain, the matrix has the converged values equal in each row, as shown in expression 5.

[Formula 5]

$$ U = \lim_{k\to\infty} A^{k} = \begin{pmatrix} \alpha_{(1)} & \cdots\cdots & \alpha_{(n)} \\ & & \\ & \alpha_{(i)} & \\ & & \\ \alpha_{(1)} & \cdots\cdots & \alpha_{(n)} \end{pmatrix} $$

The figure pattern data has this Umatrix as the elements in this embodiment.

In the expression 5, parameter $\alpha(i)$ indicates the probability that each figure appears in each frame. Accordingly, if U matrix is calculated by converting A matrix in accordance with the expression 5, and employed as the figure pattern data, it is possible to specify which figure has the highest appearance probability among all the figures appearing in the contents corresponding to the contents data. This means that the figure who is supposedly the leading character in the contents (hereinafter a "latent leading character") is specified at the same time, based on the figure pattern data.

Accordingly, it is possible to grasp how many leading characters there are in the contents corresponding to the contents data based on this figure pattern data. On the other hand, it is possible to specify what substance the contents data has, according to the attribute of dramatic personae, such as whether the figure is male or female. For example, if there are two figures who are supposedly the latent leading characters, each male and female, the contents corresponding to the contents data are considered as the substance of a love drama story.

Referring to FIGS. 3 and 4, the calculation results of the expression 3 and the calculation results substituted for the expression 5 will be described below. FIG. 3 diagrammatically shows the experimental results of calculating the matrix for the contents data, and FIG. 4 diagrammatically shows the calculation results after substituting each parameter of A matrix for the expression 5. In FIGS. 3 and 4, the xy plane represents the numerical value corresponding to the row and column of the A matrix and U matrix, and the z axis represents the numerical value corresponding to each parameter of A matrix and U matrix.

The A matrix indicates the random values, as shown in FIG. 3. On the contrary, substituting the A matrix for the expression 5, the matrix has the converged values (stationary distribution) of the matrix, so that the final appearance probability of each figure in the story is obtained. Thereby, the probability of each figure appearing in each frame is obtained. Accordingly, there is the highest probability that "figure 1" appears in the story, and "figure 1" is specified as the latent leading character in an example of FIG. 4.

<Generating the location pattern data>

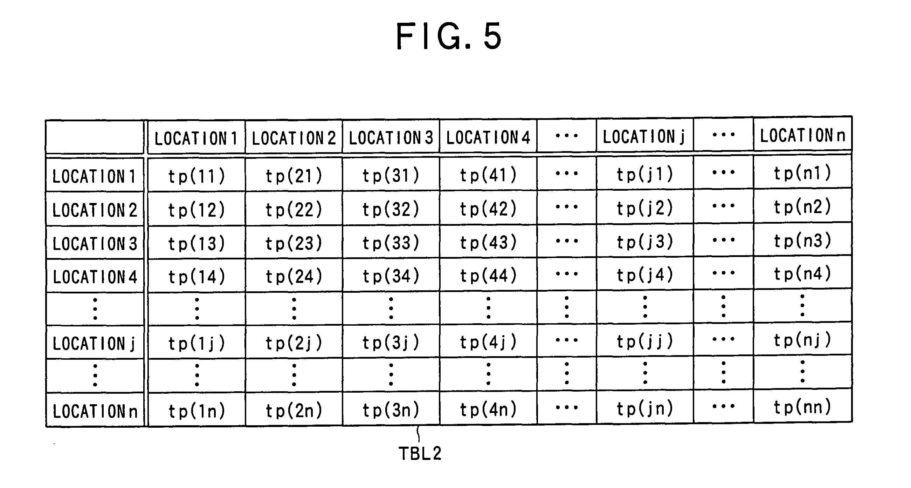

The location pattern data is generated based on a location pattern generation table TBL2 as shown in FIG. 5. FIG. 5 is a table showing the substance of the location pattern generation table TBL2 in this embodiment.

In FIG. 5, the row and column signify the location name extracted through the above process, viz., the location name on the stage in the contents corresponding to the contents data. Accordingly, it is signified that m locations of "location 1", "location 2", "location 3", .. "location m" are on the stage in the contents corresponding to the contents data in an example as shown in FIG. 5.

Also, a counter is provided in the field crossed in each row and each column of this location pattern generation table TBL2, like the figure pattern generation table TBL1. The location pattern generation table TBL2 is updated by incrementing the counter.

An updating method is basically the same as the above method of updating the figure pattern generation table TBL1, except for the criterion for incrementing the counter as shown in the following.

That is,

(i) For first frame in the contents data

In the location pattern generation table TBL2, the counter corresponding to the location on the stage is incremented by "1". For example, when the stage is "location 1", the counter for tp (11) is incremented by "1" in the location pattern generation table TBL2.

(ii) For second and following frames

a) When the location is never changed from the beginning

In the location pattern generation table TBL2, the counter corresponding to the location on the stage is incremented by "1". For example, when the stage is "location 1", the counter for tp (11) is incremented by "1" in the location pattern generation table TBL2.

b) For frames after the location is ever changed after the beginning

In the location pattern generation table TBL2, the counters corresponding to the location names before and after change are incremented by "1". For example, when the stage is changed from "location 1" to "location 2" and the state of "location 2" is continued, the counters for tp(11), tp(12), tp(21) andtp (22) are incremented by "1" in the location pattern generation table TBL2.

c) For frames after change of location in which the state of location is continued

In the location pattern generation table TBL2, the counters corresponding to the location names before and after change are incremented by "1". For example, when the state of "location 2" is continued after the stage is changed from "location 1" to "location 2", the counters for tp(12) and tp(21) in addition to tp(22) are incremented by "1" in the location pattern generation table TBL2.

If the location pattern generation table TBL2 is updated through the above process, each numerical value stored in the table TBL2 is substituted for the following expression 8 and expression 9 to calculate each parameter, so that B matrix is calculated as shown in expression 10.

[Formula 6]

$$
T t p(j) = \sum_{i=1}^{m} t p(ij) \qquad (j=1,2,.....,m)
$$

[Formula 7]

$$
b(ij) = t p(ij) / T t p(j) \qquad (i,j=1,2,.....,m)
$$

[Formula 8]

$$B = \begin{pmatrix} b\,(11) & \cdots \cdots & b\,(m1) \\ \cdot & & \cdot \\ \cdots \cdots & b\,(ij) \cdots & \cdot \\ b\,(1m) & \cdots \cdots & b\,(mm) \end{pmatrix}$$

For b(ij), like a(ij), the following relation,

[Formula 9]

$$\sum_{i=1}^{m} b\,(ij) = 1 \qquad (j=1,2,\ldots\ldots,m)$$

holds.

Thereby, the following relation

[Formula 10]

$$V = \lim_{k \to \infty} B^{k} = \begin{pmatrix} \beta\,(1) & \text{------------} & \beta\,(m) \\ & & \\ & \text{-----}\, \beta\,(i)\, \text{-----} & \\ & & \\ \beta\,(1) & \text{------------} & \beta\,(m) \end{pmatrix} \qquad \cdots \cdots (式10)$$

is given.

In this embodiment, the location pattern data has this V matrix as the elements.

In the expression 10, parameter $\beta(i)$ indicates the probability that each location is on the stage in each frame. Accordingly, if V matrix is calculated in the same way as the figure pattern data, and employed as the location pattern data, the location that is supposedly the main stage (hereinafter a "latent center location") is specified.

In this embodiment, the management server CS possesses a plurality of replacement advertising information and the story pattern data corresponding to each replacement advertising information (hereinafter referred to as "advertisement story pattern data"). Thereby, the replacement advertising information corresponding to the advertisement story pattern data highly matched with the story pattern data conforming to the user's preference is distributed to the recording-reproducing apparatus RC-k.

A method for selecting the replacement advertising information of distribution object in the management server CS will be described later.

(2) Specific configuration of each unit

(2-1) Broadcasting installation BE and public digital network ISN

Referring to FIG. 1, a specific configuration of the advertising information distribution system 1 according to this embodiment will be described below.

First of all, the public digital network ISN may consist of an ISDN (Integrated Service Digital Network) , an FTTH (Fiber To The Home) network, or the Internet to provide a data communication service to the recording-reproducing apparatus RC-k and the management server CS accommodated within its own network. This public digital network ISN may be a single network, or consist of the FTTH network and the Internet connected via an access point, not shown, for example.

The broadcasting installation BE is the installation for terrestrial broadcasting owned by the broadcaster, in which the original advertising information is incorporated into the contents data, and its contents data is modulated by the OFDM (Orthogonal Frequency Division Multiplexing) method to perform the broadcasting. Also, this broadcasting installation BE is connected to the management server CS via the private line LL, and transmits the advertising information corresponding to the newly recorded advertisement as the replacement advertising information to the management server CS, as necessary.

Referring to FIG. 6, the data format of broadcasting data to be broadcast by this broadcasting installation BE will be described below. FIG. 6 is a diagram showing the data format of contents data in this embodiment. As shown in FIG. 6, this broadcasting data is composed of the contents data and the broadcasting station generation meta data a in this embodiment.

The contents data is the data corresponding to the contents such as a program recorded in the broadcasting installation BE, and composed of data corresponding to a plurality of frames. Also, each contents data is divided into a plurality of scenes that make up a story, each scene being divided into a plurality of cuts by changing the angle of a camera. Moreover, the original advertising information is incorporated between scenes.

The data corresponding to each frame has the image data, audio data and additional information corresponding to the frame. The additional information is the information indicating the attribute of the frame, including the figure information indicating the role name, age, male/female and occupation on the set story for the figure or character (hereinafter collectively referred to as "figure") appearing in the frame and the location information indicating the location name and the setting of era that are on the stage on the set story for the frame.

Also, this additional information includes the genre information indicating the genre to which the contents data belongs, such as "drama", "documentary" and so on, and the melody information indicating the melody of BGM when BGM is flowing in the frame.

The number of frames making up each cut and the number of cuts making up each scene are arbitrary, and decided by the creator of contents data when creating each contents data. Though the data format of contents data is arbitrary, to give a more specific explanation, the image data is described in the MPEG (Moving Picture Experts Group) format, the audio data is described in the AC-3 (Audio Code number 3) format, and the additional information is described in the XML (extensible Markup Language) format in this embodiment.

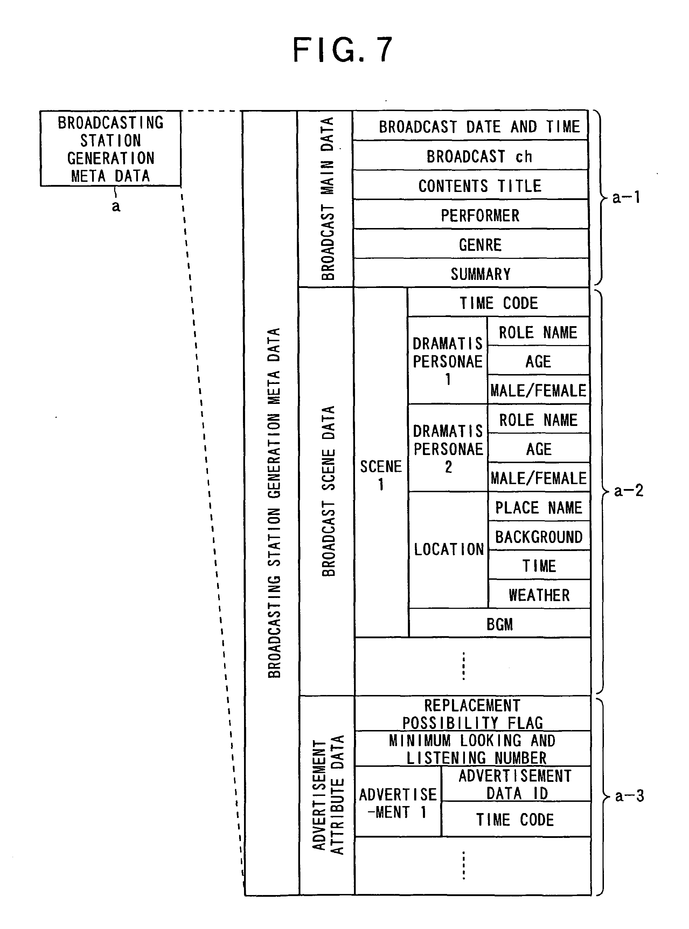

On the other hand, the broadcasting station generation meta data a indicates the attribute of contents data, and is composed of broadcast main data a-1, broadcast scene data a-2, and advertisement attribute data a-3, as shown in FIG. 7.

The broadcast main data a-1 corresponds one-to-one to each contents data and has the information indicating the attribute such as broadcast date and time, broadcasting ch, title, performer, and genre, forexample. Also, the broadcast scene data a-2 corresponds one-to-one to each scene, and has the information indicating the attribute such as time code of the scene, role name of dramatis personae, location name and time, for example.

On the other hand, the advertisement attribute data a-3 indicates the attribute of the original advertising information incorporated into the contents data, and includes the attribute information such as a replacement possibility flag, a minimum looking and listening number, advertisement ID corresponding to each original advertising information, and time code. The replacement possibility flag indicates the possibility of whether or not to replace the original advertising information, in which when the value of this flag is "0", the replacement of the original advertising information is inhibited. On the contrary, when the value of this flag is "1", the replacement of the original advertising information is permitted.

Also, the minimum looking and listening number indicates the minimum number of looking and listening till the replacement of the original advertising information incorporated into the contents data is permitted, in which the replacement of the original advertising information is inhibited till this minimum looking and listening number is exceeded.

Moreover, the advertisement ID included in the advertisement attribute data a-3 is the identification information intrinsic to each advertising information. Each apparatus constituting the advertising information distribution system 1 identifies each advertising information, based on the advertisement ID. A way of deciding the advertisement ID is arbitrary.

(2-2) Specific constitution of recording-reproducing apparatus RC-k

The recording-reproducing apparatus RC-k comprises a recording unit such as an HD recorder owned by the general viewer or listener for the contents data broadcast by the broadcasting installation BE. The recording-reproducing apparatus RC-k receives the broadcast wave to record the contents data contained in the broadcast wave in the recording unit within the self machine and reproduces the contents data.

Also, the recording-reproducing apparatus RC-k transmits a distribution request message of the replacement advertising information to the management server CS, if the replacement of the original advertising information is needed in reproducing the contents data recorded in the self machine. On the other hand, in the management server CS, the replacement advertising information is selected based on the story pattern data, so that the replacement advertising information is distributed to the recording-reproducing apparatus RC-k. The recording-reproducing apparatus RC-k replaces the distributed replacement advertising information with the original advertising information and reproduces the contents data. Consequently, in the recording-reproducing apparatus RC-k, the replacement advertising information is reproduced conforming to the user's preference, instead of the original advertising information.

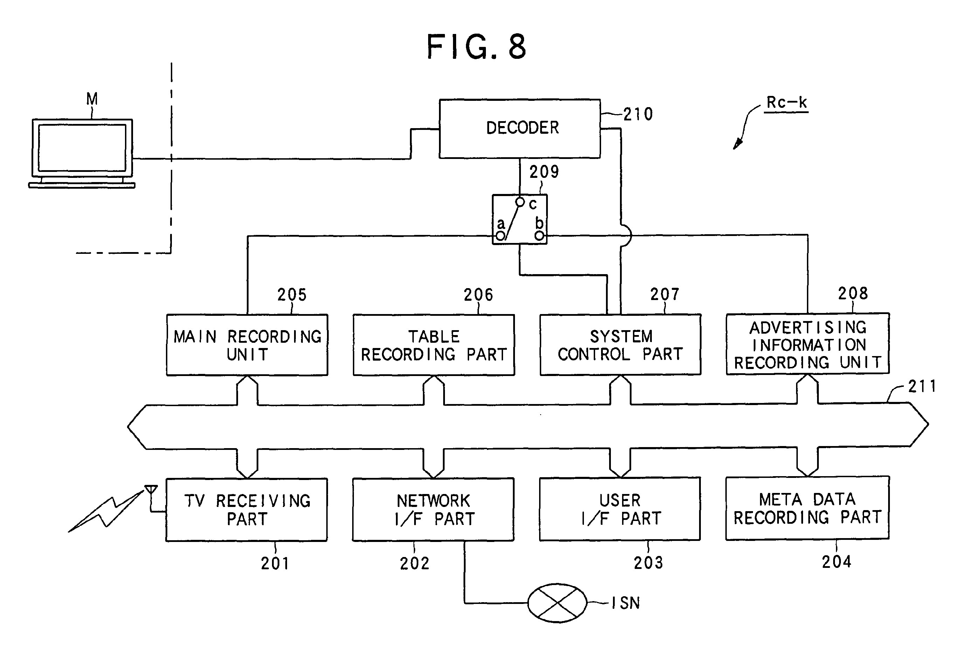

FIG. 8 shows a specific configuration of the recording-reproducing apparatus RC-k having the above functions, according to this embodiment. As shown in FIG. 8, the recording-reproducing apparatus RC-k according to this embodiment comprises a TV receiving part 201, a network interface 202 (hereinafter "interface" is abbreviated as "I/F"), a user I/F part 203, a meta data recording part 204, a main recording unit 205, a table recording part 206, a system control part 207, an advertising information recording unit 208, a switch 209, a decoder 210, and a data bus 211.

In this embodiment, the TV receiving part 201 constitutes a "receiving device" of this invention, and the main recording unit 205 constitutes a "contents data recording device". Also, in this embodiment, the system control part 207 constitutes a "reproduction device", a "determination device" and an "advertising information acquirement device".

The TV receiving part 201 is a terrestrial digital broadcast receiving unit, which is tuned to a frequency selected by the user, performs a demodulation process for the broadcast wave received via a receiving antenna AT, and supplies the demodulated contents data to the system control part 207.

The network I/F part 202 mediates the transmission and reception of data between the public digital network ISN and the data bus 211 to output the data received from the public digital network ISN to the data bus 211 and transmit the data inputted through the data bus 211 to the public digital network ISN.

The user I/F part 203 has an operation part composed of a keyboard, not shown, or an external remote controller to output an input signal corresponding to an input operation of the user to the system control part 207.

The decoder 210 decodes the contents data input via the switch 209 under the control of the system control part 207, converts the decoded data into a moving picture signal and an audio signal, and outputs those signals to the monitor M. As a result, a moving picture corresponding to the contents data is displayed and the voice is output.

The switch 209 has three terminals a, b and c, in which terminal a is connected to the output side of the main recording unit 205, terminal b is connected to the output side of the advertising information recording unit 208, and terminal c is connected to the input side of the decoder 210. Also, the switch 209 switches the connection between terminals a and b to change a signal inputted into terminal c under the control of the system control part 207. Consequently, the output data from the main recording unit 205 is inputted into the decoder 210 in the state where the switch 209 is connected to terminal a, or the output data from the advertising information recording unit 208 is inputted into the decoder 210 in the state where the switch 209 is connected to terminal b. This switch 209 may be physically or logically constructed.

The main recording unit 205 is composed of the recording unit such as HD, for example, and records the contents data included in the broadcast data received by the TV receiving part 201.

The advertising information recording unit 208 records the replacement advertising information downloaded from the management server CS. The main recording unit 205 and the advertising information recording unit 208 may be embodied by dividing one hard disk into two regions, or providing two hard disks.

The table recording part 206 is composed of an internal memory such as EEPROM or SRAM, or a mountable external memory, for example, and employed as a work area in generating the figure pattern generation table TBL1 and the location pattern generation table TBL2.

Also, the table recording part 206 is provided with a table storing a user ID of the user and a password set up by the user to manage the user on the self machine. The user ID is the unique identification information assigned to each user of the recording-reproducing apparatus RC-k accommodated within the advertising information distribution system 1, and shared between the recording-reproducing apparatus RC-k and the management server CS. A method for deciding and assigning the user ID is arbitrary. For example, when the recording-reproducing apparatus RC-k is purchased, the information regarding the purchaser of the recording-reproducing apparatus RC-k and its family may be registered in the management server CS, and the user ID may be shared between the management server CS and the recording-reproducing apparatus RC-k.

The system control part 207 has the recording media such as ROM (Read Only Memory), RAM (Random Access Memory), and EEPROM (Electrically Erasable Programmable Read Only Memory), not shown, and a CPU (Central Processing Unit), and controls each part of the recording-reproducing apparatus RC-k.

More specifically, the system control part 207 performs the following processes.

Recording control

The system control part 207 controls the recording or deleting of the contents data in or from the main recording unit 205. More specifically, the systemcontrolpart 207 makes the recording reservation for the contents data in accordance with an input signal corresponding to the input operation of the user to be supplied from the user I/F part 203. And at the date and time of recording reservation, the system control part 207 outputs a change signal of the tuning frequency via the data bus 211 to the TV receiving part 201, and sends a control signal to the main recording unit 205. Consequently, the contents data in the broadcast signal received by the TV receiving part 201 is sequentially recorded in the main recording unit 205.

A characteristic item of this embodiment is that the system control part 207 generates the system generation meta data b, and records it in association with the broadcasting station generation meta data a in the meta data recording part 204, when it is triggered upon the end of recording the contents data in the main recording unit 205.

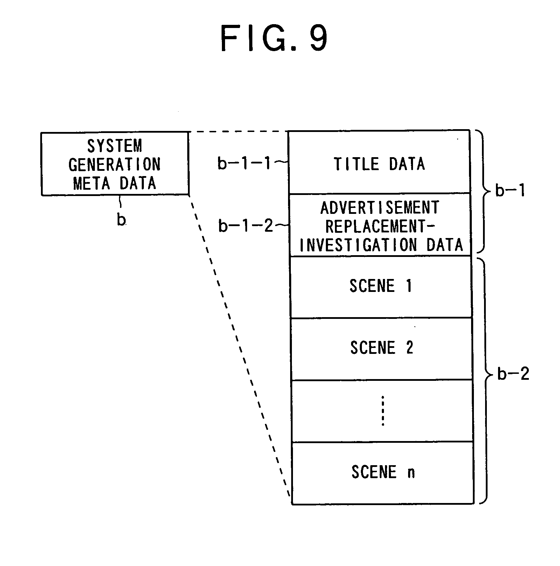

Referring to FIG. 9, the system generation meta data b will be described below. FIG. 9 is a diagram showing the data format of the system generation meta data b in this embodiment. As shown in FIG. 9, the system generation meta data b is composed of data b-1 corresponding one-to-one to each contents data and data b-2 corresponding one-to-one to each scene, and the data b-1 is composed of title data b-1-1 and advertisement replacement-investigation data b-1-2.

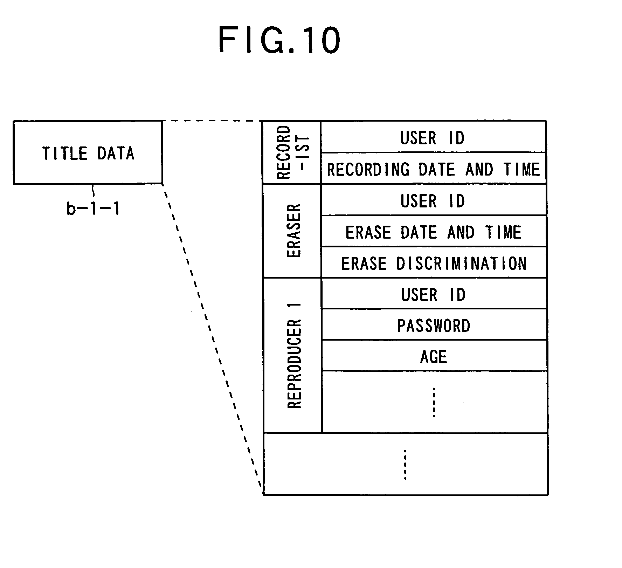

The title data b-1-1 is the data for managing the viewer of the contents data, and comprises the user ID corresponding to the recordist of the contents data, the recording date and time, the user ID corresponding to the eraser, and the user ID corresponding to the reproducer of the contents data, as shown in FIG. 10.

Then, the advertisement replacement-investigation data b-1-2 is the data for managing the advertising information to be viewed in reproducing the contents data. This advertisement replacement-investigation data b-1-2 is composed of the information indicating the attribute of original advertising information such as advertisement ID, time code, and the number of reproduction, and the information indicating the replacement advertising information to be replaced with the original advertising information.

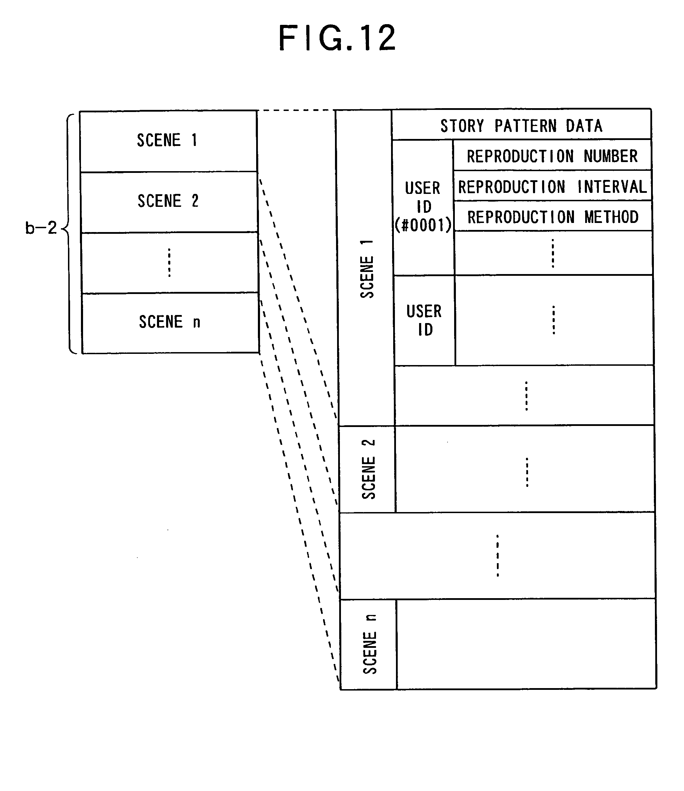

On the other hand, the data b-2 is composed of story pattern data corresponding to each scene, and data corresponding to the reproduction history such as the number of reproduction, as shown in FIG. 12. Herein, the story pattern data corresponding to each scene is generated with the system generation meta data b at the end of recording the contents data. Themethod for generating the story pattern data is the same as described above.

Reproduction control

The system control part 207 controls the reproduction of contents data recorded in the main recording unit 205. This system control part 207 has two reproduction modes of contents data, including an ordinary mode and a replacement mode. The contents data is reproduced by switching between these modes according to the contents data of reproduction object. These modes are as follows.

<Replacement mode>

In the replacement mode, the contents data is reproduced by downloading the replacement advertising information from the management server CS, and replacing the original advertising information with the downloaded replacement advertising information.

<Normal mode>

In the normal mode, the contents data is directly reproduced without replacing the original advertising information.

The reproduction mode is decided, before reproducing the contents data, by the replacement possibility flag included in the broadcasting station generation meta data a and the minimum looking and listening number. More specifically,

<When the replacement possibility flag is "0">

In this case, since the replacement of original advertising information is inhibited, the normal mode is selected.

<When the replacement possibility flag is "1">

In this case, since the replacement of original advertising information is permitted, the reproduction mode is selected in conformance with the following criteria.

(i) Type A

The normal mode is selected, because the replacement of original advertising information is unnecessary, except for

case 1 when the number of reproducing the original advertising information included in the advertisement replacement-investigation data b-1-2 is more than the minimum looking and listening number of advertisement attribute data a-3, and
case 2 when a certain time has elapsed from the recording date and time of the contents data.

The elapsed time from the recording date and time may be arbitrarily set up, and the original advertising information can be decided depending on the length of time. Also, a method for calculating the elapsed time is arbitrary, but may be decided based on a difference between the current time and the broadcast date and time described in the broadcasting station generation meta data a.

(ii) Type B

When any one of the cases 1 and 2 is met, the replacement mode is selected, because the replacement of original advertising information is necessary.
Also, if the number of reproducing the contents data is increased, the replacement advertising information corresponding to the contents data is already downloaded from the management server CS, and recorded in the advertising information recording unit 208 in some instances. In this state, if the replacement mode is set up, the system control part 207 decides the replacement advertising information to replace the original advertising information in the following way.

a) When the number of reproducing the replacement advertising information already recorded in the advertising information recording unit 208 does not exceed the minimum looking and listening number set for the original advertising information, the already downloaded replacement advertising information is employed without downloading the new replacement advertising information.
b) When the number of reproducing the replacement advertising information recorded in the advertising information recording unit 208 exceeds the minimum looking and listening number set for the original advertising information, the new replacement advertising information is downloaded from the management server CS, and the downloaded replacement advertising information is employed for replacement of the original advertising information.

A specific operation at this time will be described later.
In this embodiment, the system control part 207 updates the system generation meta data b recorded in the meta data recording part 204, and uploads the system generation meta data b after update along with the user ID to the management server CS, when reproducing the contents data recorded in the main recording unit 205. Consequently, the system generation meta data b in the updated state at any time is shared between the recording-reproducing apparatus RC-k and the management server CS.

(2-3) Specific configuration of management server CS

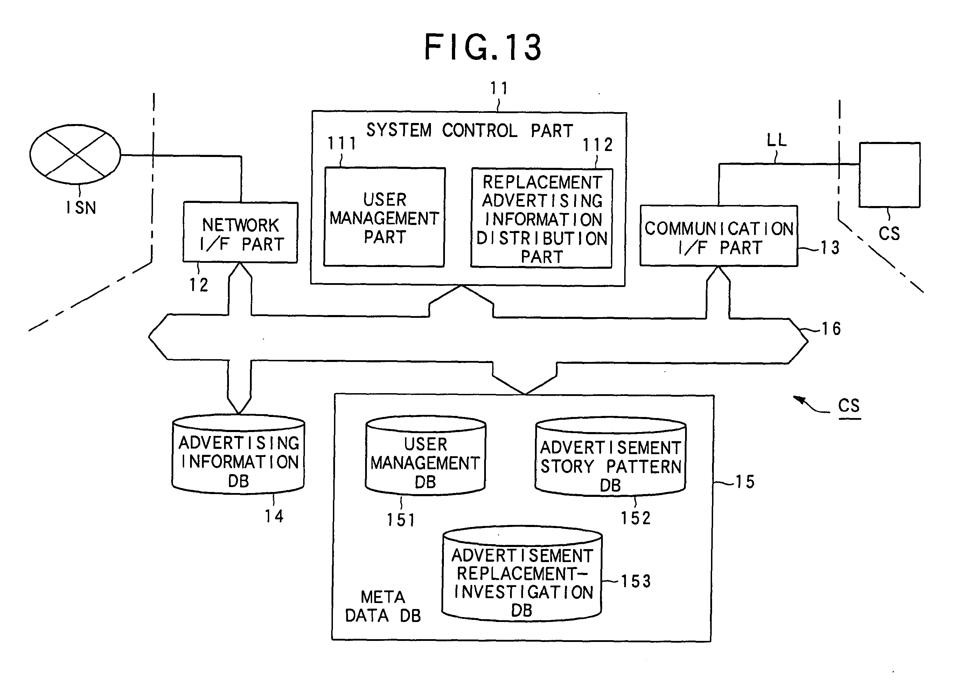

The management server CS is the server owned by the advertisement agent or the broadcaster entrusted with broadcasting the advertising information from the advertisement agent and manages the replacement of advertising information. FIG. 13 shows a specific configuration of the management server CS.
As shown in FIG. 13, the management server CS in this embodiment comprises a system control part 11, a network I/F part 12, a communication I/F part 13, an advertising information database 14 (hereinafter "database" is referred to as "DB"), a meta data DB 15, and a data bus 16 for interconnecting them.

The advertising information DB 14 in this embodiment constitutes a "first recording device" of this invention, and themeta data DB 15 constitutes a "second recording device". Also, the system control part 11 in this embodiment constitutes an "acquirement device", a "selection device" and an "advertising information distribution device" of this invention.

The network I/F part 12 mediates the transmission and reception of data between the public digital network ISN and the data bus 16 to output the data received from the public digital network ISN to the data bus 16 and transmit the data inputted through the data bus 16 to the public digital network ISN.

The communication I/F part 13, which is connected to a private line, outputs the data transmitted from the management server CS to the data bus 16, and transmits the data passed through the data bus 16 to the management server CS via the private line LL.

The replacement advertising information DB 14 stores the replacement advertising information transmitted from the broadcasting installation BE via the private line LL. The replacement advertising information stored in this replacement advertising information DB 14 is distributed by the system control part 11 in accordance with a request message from the recording-reproducing apparatus RC-k.

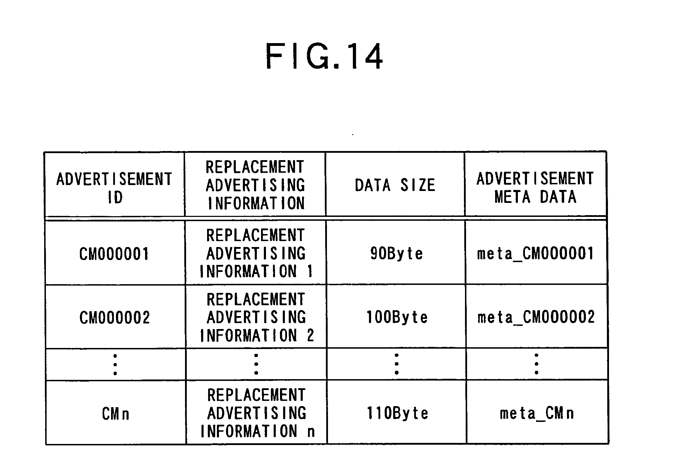

FIG. 14 is a table showing one example of recorded substance of the replacement advertising information DB 14 in this embodiment. As shown in FIG. 14, in this embodiment, this replacement advertising information DB 14 records the data main body of replacement advertising information corresponding to the advertisement ID of each stored replacement advertising information, the data size of the replacement advertising information, and the advertisement meta data corresponding to the replacement advertising information.

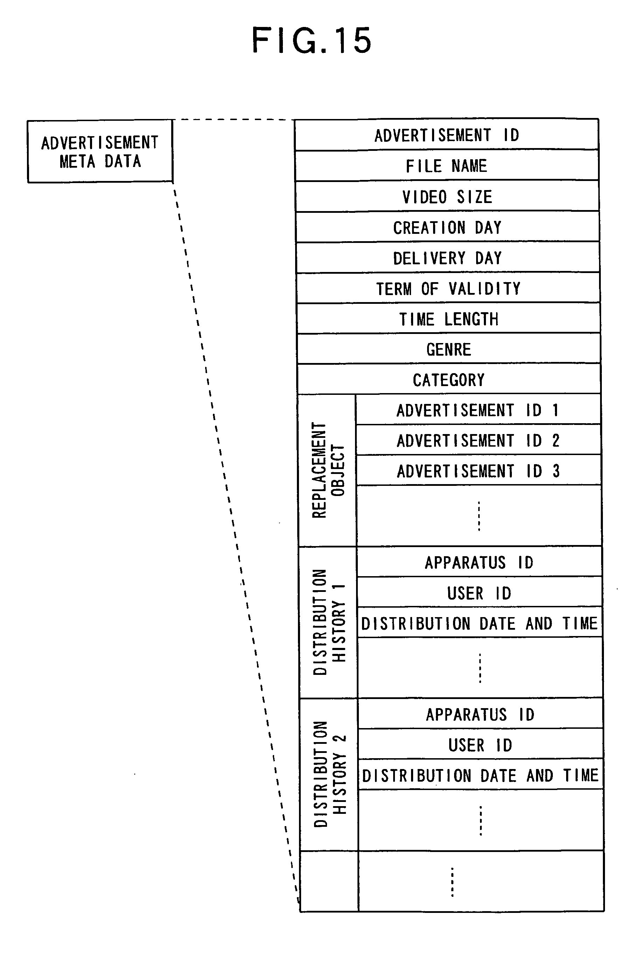

The advertisement meta data recorded in this replacement advertising information DB 14 is the data indicating the attribute of replacement advertisement data, including the advertisement ID corresponding to the advertising information, file name of advertising information, creation date, and a list of advertisement IDs for the advertising information of replacement object, as shown in FIG. 15. Also, this advertisement meta data comprises the distribution history including the user ID of the user for the recording-reproducing apparatus RC-k that is distribution destination of the replacement advertising information, the distribution date and time and so on, in which the history information is updated every time each replacement advertising information is distributed to the recording-reproducing apparatus RC-k.

The system control part 11 has the CPU, ROM and EEPROM, not shown, and controls each part of the management server CS. This system control part 11 comprises a user management part 111 and a replacement advertising information distribution part 112, each part having the following function.

a) User management part 111

As described above, the recording-reproducing apparatus RC-k uploads the system generation meta data b in reproducing the contents data recorded on the self machine. The user management part 111 manages the system generation meta data b uploaded from the recording-reproducing apparatus RC-k. To implement those functions, the meta data DB 15 in this embodiment is provided with a user management DB 151 and an advertisement replacement-investigation DB 153.

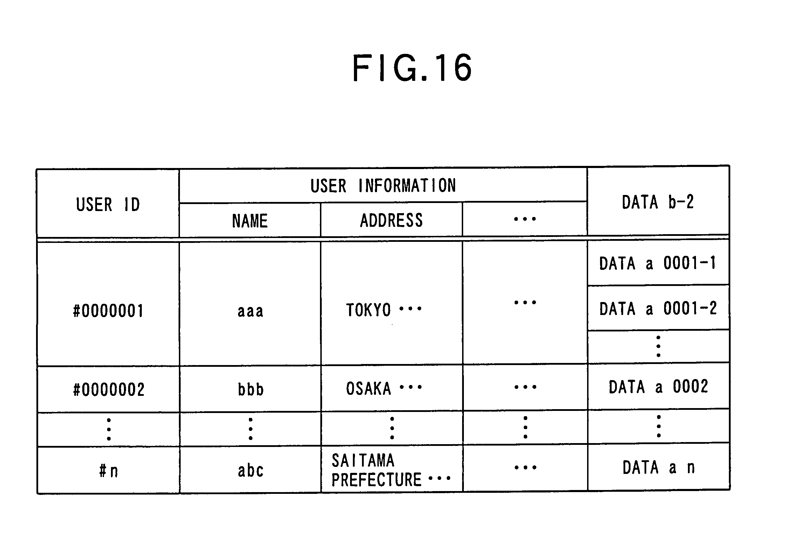

The user management DB 151 stores the data for managing the user of each recording-reproducing apparatus RC-k. FIG. 16 shows the recorded substance of the user management DB 151. The user management DB 151 in this embodiment stores, for each user ID, the user information of the user, and the data b-2 included in the system generation meta data b uploaded from the recording-reproducing apparatus RC-k, as shown in FIG. 16. Herein, the data b-2 comprises the reproduction history of the user, whereby the management of the reproduction history of each user can be made by referring to the data b-2 stored in the DB 151.

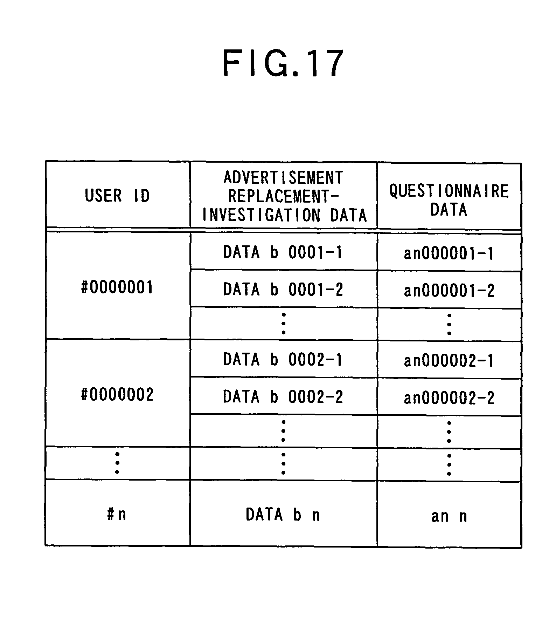

On the contrary, the advertisement replacement-investigation DB 153 stores the data for managing the distribution situation of each replacement advertising information and the reproduction situation after distribution. FIG. 17 shows the recorded substance of the advertisement replacement-investigation DB 153. The advertisement replacement-investigation DB 153 in this embodiment stores, for each user ID, the advertisement replacement-investigation data b-1-2 uploaded from the recording-reproducing apparatus RC-k, as shown in FIG. 17. Accordingly, it is possible to grasp the distribution situation of replacement advertising information for each user by referring to the data stored in the DB 153.

Also, the advertisement replacement-investigation DB 153 stores, for each advertisement ID, the data indicating the questionnaire result of the user who has viewed the replacement advertising information corresponding to the advertisement ID (hereinafter referred to as "questionnaire data").

The data format corresponding to the questionnaire result is arbitrary. For example, if the user answers the questionnaire by selecting "yes" or "no" in accordance with predetermined question items, the number of answers made by the users for each question item may be counted.

Though the questionnaire method is also arbitrary, the user management part 111 holds the data corresponding to a page for questionnaire, and the user answers the questionnaire on the page in this embodiment.

b) Replacement advertising information distribution part 112

The replacement advertising information distribution part 112 has a function of distributing the replacement advertising information for the request message transmitted from the recording-reproducing apparatus RC-k, and is logically implemented by providing the system control part 11 with an FTP (File Transfer Protocol) file server function.

To implement this function, the meta data DB 15 of the management server CS in this embodiment is provided with an advertisement story pattern DB 152, in addition to a user management DB 151 and an advertisement replacement-investigation DB 153.

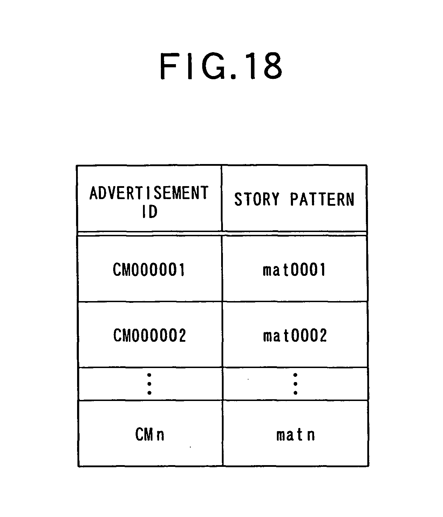

The advertisement story pattern DB 152 stores the story pattern data corresponding to each replacement advertising information stored in the replacement advertising information DB 14 (hereinafter referred to as "advertisement story pattern data"). FIG. 18 shows the recorded substance of the advertisement story pattern DB 152. As shown in FIG. 18, the advertisement story pattern DB 152 stores the advertisement ID corresponding to replacement advertising information stored in the replacement advertising information DB 14, and the advertisement story pattern data corresponding to replacement advertising information associatively.

Herein, the advertisement story pattern data is generated in the user management part 111 of the management server CS, and recorded in the DB 152, when the replacement advertising information is transmitted from the broadcasting installation BE. Accordingly, the advertisement story pattern data and the story pattern data included in the data b-2 stored in the user management DB 151 are obtained from different origins in this embodiment. The method for generating the story pattern data is the same as described above.

The replacement advertising information distribution part 112 performs the following process in deciding the replacement advertising information to be distributed to the recording-reproducing apparatus RC-k.

That is, the replacement advertising information distribution part 112 reads the data b-2 corresponding to the user ID appended to the request message from the user management DB 151, and extracts each story pattern data included in the data b-2. And the replacement advertising information distribution part 112 generates the story pattern data indicating the substance of contents conforming to the user's preference, based on the extracted story pattern data.

Though the method for generating the story pattern data indicating the substance of contents conforming to the user's preference is arbitrary, the following method is taken to give a more specific explanation in this embodiment. That is, the user management part 111 calculates the average value of U and V matrixes corresponding to each extracted story pattern data, and acquires the U and V matrixes corresponding to this calculation result as the story pattern data indicating the substance of contents conforming to the user' s preference.

If the story pattern data indicating the substance of contents conforming to the user's preference is generated in this way, the replacement advertising information distribution part 112 retrieves the advertisement story pattern data most highly matched with the generated story pattern data from the advertisement story pattern DB 152. As a result of this retrieval, the replacement advertising information corresponding to the hit advertisement story pattern data is decided as the distribution object.

In this case, the replacement advertising information distribution part 112 determines whether or not both the story pattern data are matched by the following method.

First of all, among the U and V matrixes corresponding to both the story pattern data, $\alpha(i)$ value and $\beta(i)$ value of the highest numerical value, viz., corresponding to the latent leading character and the latent center location, are substituted for expression 11 and expression 12.

[Formula 11]

$$cA = \sqrt{\sum_{i=1}^{n} \{\alpha 1(i) - \alpha 2(i)\}^2 / n}$$

[Formula 12]

$$c\,B = \sqrt{\sum_{i=1}^{m} \{\beta 1 (i) - \beta 2 (i)\}^2 / m}$$

Herein, since the cA value is decided depending on a difference between $\alpha$ (i) values corresponding to both the story pattern data to be compared, as shown in the expression 11, the cA value is smaller as $\alpha$(i) values are closer in the U matrixes of both the story pattern data. Accordingly, as this cA value is smaller, both the U matrixes are closely resembled. Thereby the substantial similarity between the contents substance conforming to the user's preference and the replacement advertising information is assured.

The cB value is also treated in the same way. As the cB value is smaller, the latent center location within the contents is positioned more closely.

The replacement advertising information distribution part 112 selects the advertisement story pattern data having the smallest cA value and cB value as the advertisement story pattern data most highly matched. In the case where a plurality of advertisement story pattern data having the equal cAvalue and cB value, the replacement advertising information distribution part 112 selects the advertisement story pattern data having the smaller cA value as the advertisement story pattern data highly matched.

[1.2] Operation of first embodiment

(1) Schematic operation of recording the contents data

In the recording-reproducing apparatus RC-k according to this embodiment, the operation of recording the contents data will be described. In the following explanation, it is supposed that the broadcast wave in which the contents data and the broadcasting station generation meta data a are modulated is broadcast from the broadcasting installation BE.

First of all, if the user operates the user I/F part 203 to turn on the power of the recording-reproducing apparatus RC-k, the contents data received by the TV receiving part 201 is decoded by the decoder 210 and supplied as the image signal to the monitor M under the control of the system control part 207. Consequently, the image corresponding to the contents data during broadcasting is displayed on the monitor M.

In this state, when the contents data tries to be recorded, the user needs to perform a predetermined operation on the user I/F part 203. In this case, though the operation is arbitrary, the user may depress a recording reservation button provided on the operation part, not shown, in the user I/F part 203.

When this operation is performed, the system control part 207 produces the image data corresponding to an screen for inputting the user ID and the password to decide the recordist and supplies it to the decoder 210. Consequently, the screen for inputting the user ID and password is displayed on the monitor M. If the user inputs the user ID and password into the user I/F part 203 in this state, the system control part 207 determines whether or not the user ID and password are matched with the user ID and password recorded in the table recording part 206, and if not matched, the process is ended.

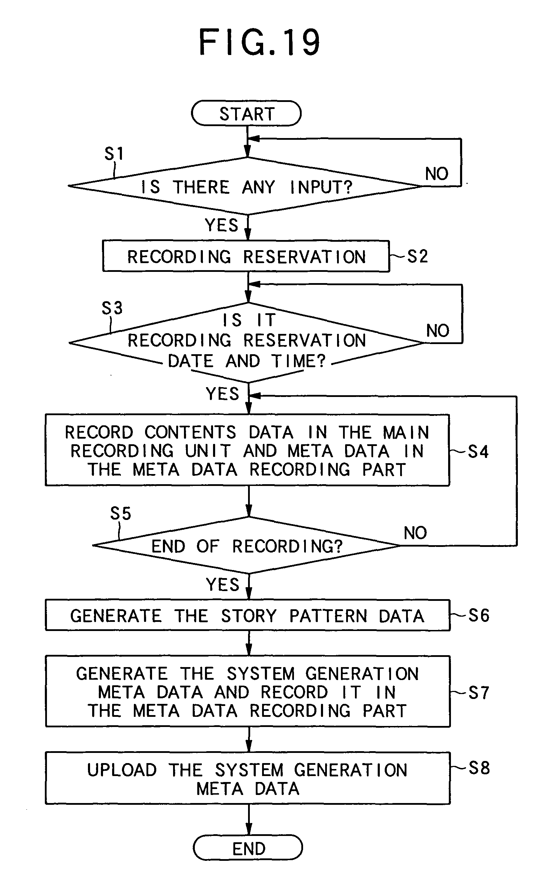

On the other hand, if the user ID and password are matched, the system control part 207 stores the user ID and password in the RAM, not shown, and starts a procedure as shown in FIG. 19. In this procedure, the system control part 207, first of all, determines whether or not an input for designating the recording reservation date and time is made by the user (step S1), and the processing at step S1 is repeated ("no") until the input operation is made by the user. In this case, if the image corresponding to the reservation screen is outputted to the monitor M, and the recording reservation date and time are designated on the screen, the recording reservation operation of the user is facilitated.

Then, if the user performs the input operation for making the recording reservation, the determination at step S1 is "yes", whereby the system control part 207 performs the recording reservation for the contents data in accordance with the input operation (step S2). At this time, the user is notified that the recording reservation is completed, whereby the input operation of the user is completed.

Then, the system control part 207 determines whether or not it is the recording reservation date and time (step S3), and the processing at step S3 is repeated ("no") until it is the recording reservation date and time. Thereafter, if the time has passed and it is the recording reservation date and time, the determination at step S3 is "yes" in the system control part 207, and the processing at step S4 is performed.

At step S4, the system control part 207 outputs a control signal to the TV receiving part 201 and the main recording unit 205. Consequently, the broadcast data corresponding to reservation ch is sequentially received in the TV receiving part 201 and recorded in the main recording unit 205, and the broadcasting station generation meta data a included in the broadcast data is recorded in the meta data recording part 204.

Then, the system control part 207 determines whether or not the recording of the contents data is ended (step S5), and the processings at step S4 and step S5 are repeated until the recording of the contents data is ended, thereby continuing the recording of the contents data. Consequently, the contents data corresponding to the recording reservation is recorded in the main recording apparatus 205 and the meta data recording part 204.

On the other hand, at the end time of the recording reservation, the system control part 207 makes a determination "yes" at step S5, whereby the figure pattern generation table TBL1 and the location pattern generation table TBL2 are created in the table recording part 206, and the story pattern data corresponding to the contents data is generated based on those tables TBL1 and TBL2 (step S6). In this case, the system control part 207 calculates the U and V matrixes for each scene in accordance with the expression 5 and the expression 10, and generates the story pattern data corresponding to the U and V matrixes.

Then, the system control part 207 generates the system generation meta data b, and stores the generated data b, in association with the broadcasting station generation meta data a corresponding to the contents data, in the meta data recording part 204 (step S7). In this case, the system control part 207 generates the data b-2 for each scene, based in the story pattern data generated at step S6.

And if a series of processings are ended, the system control part 207 uploads the generated system generation meta data b (step S8), and the procedure is ended. In this case, the system control part 207 appends the user ID to the system generation meta data b.

On the other hand, if the system generation meta data b is uploaded from the recording-reproducing apparatus RC-k, the user management part 111 in themanagement server CS updates the user management DB 151 and the advertisement replacement-investigation DB 153 based on the user ID included in the system generation meta data b uploaded.

(2) Operation of reproducing the contents data

(2-1) Procedure in the recording-reproducing apparatus RC-k

(2-1-1) Contents data reproduction process

An operation of reproducing the contents data recorded in the main recording unit 205 in the recording-reproducing apparatus RC-k according to this embodiment will be described below.

First of all, when the contents data recorded in the main recording unit 205 is reproduced, the user needs to perform a predetermined operation on the user I/F part 203. Though the operation is arbitrary, the user may depress a reproducing button provided on the operation part, not shown, in the user I/F part 203 to perform the following processings.

When this input operation is performed, the system control part 207 prompts the user to input the user ID and the password to decide the reproducer and determines whether or not the input user ID and password are matched with the user ID and password recorded in the table recording part 206. If the user ID and password are matched, the system control part 207 produces the image data corresponding to an screen for allowing the user to select a reproduction obj ect, and outputs it to the decoder 210. Consequently, a selection screen for selecting the reproduction object is displayed on the monitor M. The user performs the input operation for selecting the contents data to be reproduced in this state. The configuration of the selection screen is arbitrary. For example, a list of contents titles included in the broadcasting station generation meta data a may be displayed.

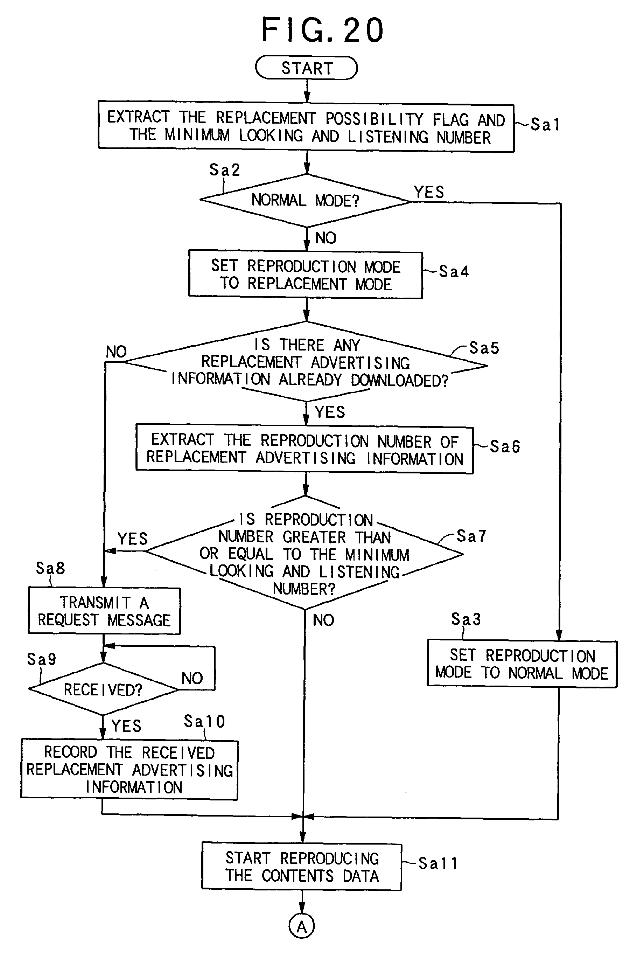

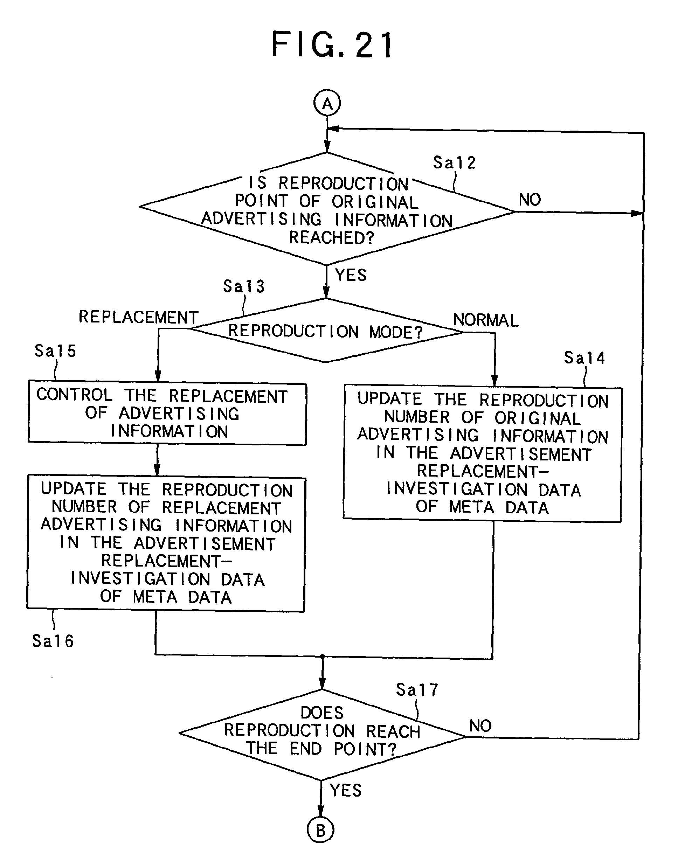

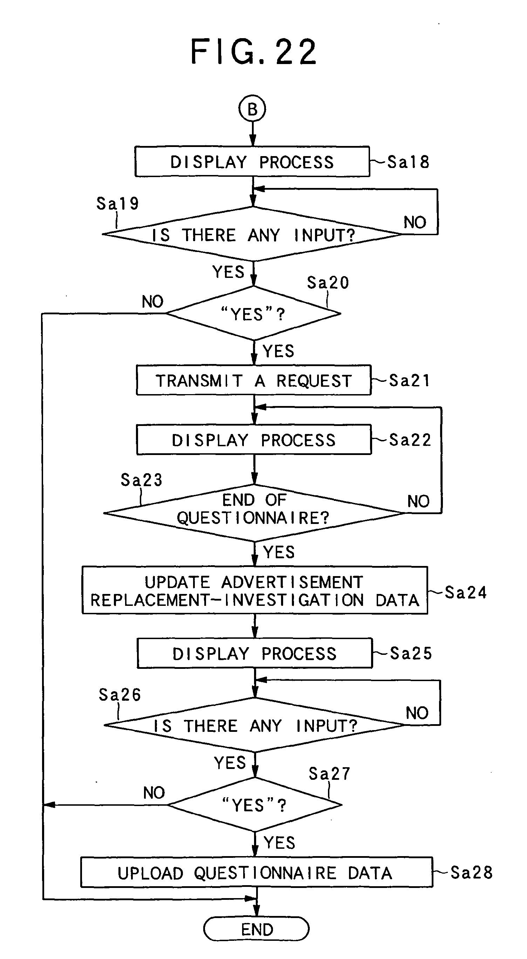

When the user performs an input operation for deciding the reproduction obj ect on the user I/F part 203 in this state, the system control part 207 performs a content data reproduction process in accordance with an input signal sent from the user I/F part 203, as shown in FIGS. 20 to 22.

In this process, the system control part 207 firstly reads the broadcasting station generation meta data a corresponding to the contents data selected by the user from the meta data recording part 204 to expand it in the RAM, not shown, and extracts the replacement possibility flag and the minimum looking and listening number included in the broadcasting station generation meta data a (step Sa1).

Then, the system control part 207 determines whether or not the reproduction mode is turned into the normal mode, based on the broadcasting station generation meta data a (step Sa2).

More specifically, the system control part 207

    a) Selects the normal mode if the replacement possibility flag is "0".
    b) Selects the normal mode if the replacement possibility flag is "1", because the replacement of original advertising information is unnecessary, except for

case 1 when the number of reproducing the original advertising information included in the advertisement replacement-investigation data b-1-2 is more than, the minimum looking and listening number of advertisement attribute data a-3, and
case 2 when a certain time has elapsed from the recording date and time of the contents data.

c) Selects the replacement mode if the replacement possibility flag is "1", and any one of the cases 1 and 2 is met (step Sa2).

As a result of determination, when the normal mode is selected ("yes" at step Sa2), the system control part 207 sets the reproduction mode to the normal mode (step Sa3), and the reproduction of the contents data is started (step Sail).

On the contrary, at step Sa2, if the replacement mode is selected at step Sa2 ("no" at step Sa2), the system control part 207 sets the reproduction mode to the replacement mode (step Sa4), and determines whether or not the replacement advertising information has been already downloaded for replacement of the original advertising information (step Sa5). If this determination is "no", the system control part 207 transmits a request message to the distribution server CS (step Sa8), and the system is kept waiting for receiving ("no" at step Sa9). In this case, the system control part 207 appends the user ID input by the user in reproducing the request message and the advertisement ID corresponding to the original advertising information.

On the other hand, if the request message is received from the recording-reproducing apparatus RC-k, the replacement advertising information distribution part 112 of the management server CS performs a replacement advertising information decision process to decide the replacement advertising information to be distributed to the recording-reproducing apparatus RC-k. The replacement advertising information decided through this process, together with the advertisement ID corresponding to the replacement advertising information, is distributed to the recording-reproducing apparatus RC-k.

In this way, if the distribution of the replacement advertising information is completed, the system control part 207 of the recording-reproducing apparatus RC-k makes the determination "yes" at step Sa9, and the replacement advertising information distributed from the management server CS is recorded in the advertising information recording unit 208 (step Sa10). In this case, the system control part 207 adds the advertisement ID to the advertisement replacement-investigation data b-1-2 recorded in the meta data recording part 204 to produce a field for managing the replacement advertising information. Through this processing, if the replacement advertising information is recorded in the advertising information recording unit 208, the system control part 207 starts to reproduce the contents data designated by the user (step Sa11).

On the contrary, if the determination at step Sa5 is "yes", the system control part 207 extracts the number of reproduction corresponding to the replacement advertising information from the advertisement replacement-investigation data b-1-2 recorded in the meta data recording part 204 (step Sa6), and determines whether or not the extracted number of reproduction is greater than or equal to the minimum looking and listening number extracted at step Sa1 (step Sa7). As a result, if this determination is "yes", the system control part 207 performs the processings at steps Sa8 to Sa10 and starts to reproduce the contents data (step Sa11). However, if this determination is "no", the system control part 207 does not perform the processings at steps Sa8 to Sa10 and starts to reproduce the contents data (step Sa11).

In this way, if the reproduction of the contents data is started, the system control part 207 determines whether a reproduction point of the original advertising information is reached (step Sa12), the determination process is repeated ("no") until the reproduction point is reached. In this case, the system control part 207 determines the reproduction point of the original advertising information in accordance with a time code included in the broadcast scene data a-2 of the broadcasting station generation meta data a recorded in the meta data recording part 206.

On the other hand, the reproduction of the contents data progresses to reach the reproduction point of the original advertising information, the determination at step Sa12 is "yes", and the system control part 207 determines whether or not the currently set reproduction mode is the normal mode (step Sa13).

If it is determined that the reproduction mode is set to the normal mode, the system control part 207 updates the number of reproduction corresponding to the original advertising information of the advertisement replacement-investigation data b-1-2 recorded in the meta data recording part 204 (step Sa14). And the system control part 207 determines whether or not the reproduction of the contents data being currently reproduced reaches the end point (step Sa17). If it is determined that the end point is not reached, the processings at steps Sa12 to Sa14 are repeated ("no" at step Sa17).

On the other hand, if it is determined at step Sa13 that the current reproduction mode is the replacement mode, the system control part 207 controls the switching of the switch 209 (step Sa15). Through the same process, the switch 209 is connected from terminal c to b, so that the input signal to the terminal c is passed as the output signal to the terminal b. Consequently, if the replacement advertising information is input into the decoder 210 until the reproduction end time of the original advertising information, so that the replacement advertising information is displayed on the motor M.

In this way, if the processing at step Sa15 is completed, the system control part 207 updates the number of reproduction corresponding to the replacement advertising information of the advertisement replacement-investigation data b-1-2 recorded in the meta data recording part 204 (step Sa16). And the system control part 207 determines whether or not the reproduction of the contents data reaches the end point, and repeats the processings at steps Sa12 and Sa13 and Sa15 to Sa17 until the end point is reached.

On the other hand, if the reproduction of the contents data reaches the end point, the system control part 207 makes the determination "yes" at step Sa17, and produces the image data corresponding to a screen for prompting the user to answer the questionnaire to output it to the decoder 210 (step Sa18). Then, the system is kept waiting for the input from the user (step Sa19). Consequently, two buttons "yes" and "no" are displayed along with the character string such as "Answering the questionnaire?" on the monitor M.

If the user performs the input operation for selecting any button of "yes" and "no" to the user I/F part 203 in accordance with such a display, an input signal corresponding to the input operation is supplied from the user I/F part 203, and the system control part 207 makes the determination "yes" at step Sa19. Consequently, the system control part 207 determines whether or not the input signal corresponds to "yes" at step Sa20.

Herein, when the user performs the input operation for selecting "no", for example, the system control part 207 makes the determination "no" at step Sa20, and the process is ended.

On the contrary, when the user performs the input operation for selecting "yes", the system control part 207 makes the determination "yes" at step Sa20, and transmits a request message for questionnaire page to the management server CS (step Sa21). The management server CS returns the HTML data corresponding to the questionnaire page as a response message in response to this request message.

On the other hand, if the HTML data is transmitted, the system control part 207 of the recording-reproducing apparatus RC-k displays the image corresponding to the questionnaire page on the monitor M, based on the HTML data (step Sa22), and determines whether or not the questionnaire is ended (step Sa23).

Thereafter, if the user answers the questionnaire, the determination at step S23 is "yes" in the system control part 207, so that the advertisement replacement-investigation data b-1-2 is updated (step Sa24).

Then, the system control part 207 produces the image data and supplies it to the decoder 210 (step Sa25), and is kept waiting for the input from the user (step Sa26). Consequently, two buttons "yes" and "no" are displayed along with the character string "Uploading the questionnaire substance and meta data after update to the server?" on the monitor M.

If the user performs the input operation for selecting "no" to the user I/F part 203 in accordance with such a display, an input signal corresponding to the input operation is supplied to the system control part 207, whereby the determination at step Sa26 is "yes", and then, the determination at step Sa27 is "no". Consequently, the system control part 207 does not upload the advertisement replacement-investigation data b-1-2 after update and the questionnaire data corresponding to the questionnaire result inputted by the user to the management server CS and ends the process.

On the other hand, if the user performs the input operation for selecting "yes" to the user I/F part 203 in accordance with a screen displayed on the monitor 2, the system control part 207 makes the determination "yes" at step Sa26. And the system control part 207 makes the determination "yes" at step Sa27, and uploads the questionnaire data corresponding to the questionnaire result inputted by the user and the advertisement replacement-investigation data b-1-2 after update to the management server CS (step Sa28) and ends the process.

If this questionnaire data is uploaded, the management server CS stores the questionnaire data and the advertisement replacement-investigation data b-1-2 after update in the advertisement replacement-investigation DB 153. Consequently, the questionnaire result of the user for the replacement advertising information distributed from the management server CS is managed in the management server CS.

(2-1-2) Reproduction history information management process

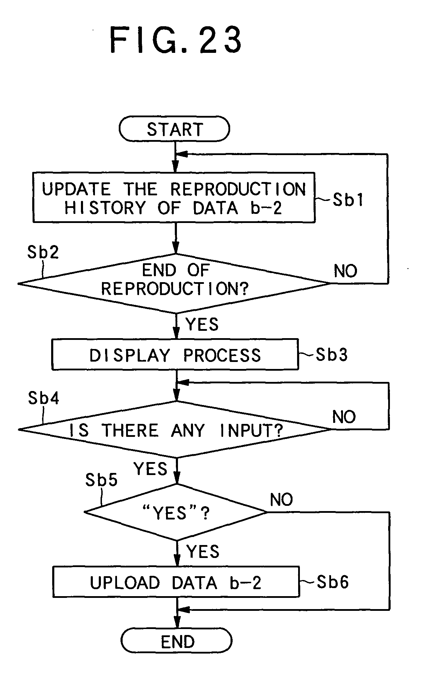

Referring to FIG. 23, a reproduction history information management process performed by the system control part 207 of the recording-reproducing apparatus RC-k will be described below. This process is performed, with the step Sa11 in FIG. 20 as a trigger, to upload the story pattern information to the management server CS.

In this process, the system control part 207 firstly updates the reproduction history corresponding to a scene n included in the data b-2 within the system generation meta data b as shown in FIG. 18, at the end of reproducing the scene n included in the contents data during reproduction is ended (step Sb1). In this case, the system control part 207 updates the reproduction history corresponding to the user ID inputted by the user when selecting the reproduction object. For example, when the user ID of the user performing the contents data is "#0001", the system control part 207 updates the field corresponding to "#0001" in the reproduction history corresponding to the "scene 1", if the reproduction of the "scene 1" is ended (step Sb1).

Then, the system control part 207 determines whether or not the reproduction of the contents data reaches the end point (step Sb2), and the processings at steps Sb1 and Sb2 are repeated until the reproduction of the contents data is ended.

For example, starting the reproduction of the contents data is started, if the scene of reproduction object transfers from "scene 1" to "scene 2" to "scene 3", the system control part 207 updates the reproduction history corresponding to "scene 1" (step Sb1), and as a result of determination "no" at step Sb2, updates the reproduction history in the order of "scene 2" and "scene 3".

Thereafter, the reproduction of the contents data progresses to reach the end point of reproducing the contents data, the determination at step Sb2 is "yes", whereby the system control part 207 produces the image data corresponding to a confirmation screen as to whether or not to permit the user to upload the data b-2 and outputs it to the decoder 210 (step Sb3), and the system is kept waiting for the input from the user (step Sb4). Consequently, two buttons "yes" and "no" are displayed along with the character string such as "Uploading the reproduction history. OK?" on the monitor M.

If the user performs the input operation for selecting any button of "yes" and "no" to the user I/F part 203 in accordance with such a display, an input signal corresponding to the input operation is supplied from the user I/F part 203, whereby the determination "yes" at step Sb4 is "yes". Consequently, the system control part 207 determines whether or not the input signal corresponds to "yes" at step Sb5.

Herein, for example, when the user performs the input operation for selecting "no", the system control part 207 makes the determination "no" at step Sb5, and ends the process.

On the contrary, when the user performs the input operation for selecting "yes", the system control part 207 makes the determination "yes" at step Sb5, uploads the data b-2 to the management server CS (step Sb6) , and ends the process. At this time, the system control part 207 appends the user ID corresponding to the reproducer to the data b-2 uploaded to the management server CS.

On the other hand, if the data b-2 is uploaded, the user management part 111 of the management server CS stores the data b-2 in the user management DB 151. At this time, the user management part 111 searches the user management DB 151 with the user ID appended to the data b-2 as the search key, and stores the data b-2 in the field corresponding to the user ID. Consequently, the user management DB 151 is updated.

(2-2) Replacement advertising information decision process in the management server CS

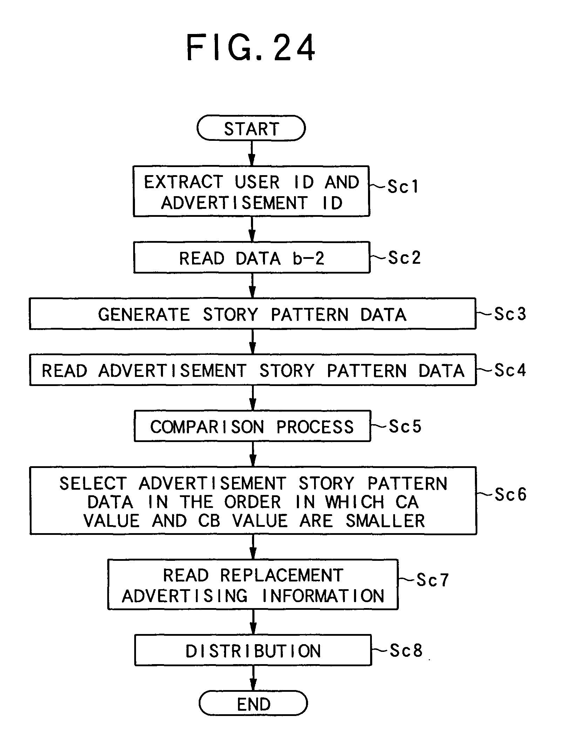

Referring to FIG. 24, a replacement advertising information decision process performed in management server CS will be described below. This process is started by receiving the request message transmitted by the recording-reproducing apparatus RC-k at step Sa8 in FIG. 20 as the trigger.

In this process, the replacement advertising information distribution part 112 of the management server CS firstly extracts the user ID appended to the request message and the advertisement ID, and store them in the RAM, not shown (step Sc1). And the replacement advertising information distribution part 112 searches the user management DB 151 with the user ID as the search key, and reads the data b-2 stored corresponding to the user ID (step Sc2).

Then, the replacement advertising information distribution part 112 extracts the story pattern data included in the read data b-2, and generates the story pattern data indicating the substance of contents conforming to the user's preference, based on the story pattern data (step Sc3). The generation method employed herein has been described previously.

Then, the replacement advertising information distribution part 112 reads the advertisement story pattern data from the advertisement story pattern DB 152 (step Sc4) , and performs a comparison processing (step Sc5). In this comparison processing, the replacement advertising information distribution part 112 calculates the cA value and cB value between each advertisement story pattern data and the story pattern data generated at step Sc3 in accordance with the expressions 11 and 12.

If this comparison processing is ended, the replacement advertising information distribution part 112 selects some advertisement story pattern data in the order in which a sum of cA value and cB value is the minimum (step Sc6). In this case, the replacement advertising information distribution part 112 excludes the advertisement story pattern data corresponding to the advertisement ID, based on the advertisement ID stored in the RAM. Also in this case, the replacement advertising information distribution part 112 decides the number of replacement advertising information to be distributed based on the advertisement ID, and selects the decided number of advertisement story pattern data.

Then, the replacement advertising information distribution part 112 searches the replacement advertising information DB 14 with the advertisement ID stored in the advertisement story pattern DB 152 corresponding to the advertisement story pattern data selected at step Sc6 as the search key, and reads the replacement advertising information corresponding to the advertisement ID (step Sc7). In this way, if the replacement advertising information is read, the replacement advertising information distribution part 112 distributes the replacement advertising information to the recording-reproducing apparatus RC-k (step Sc8), and the process is ended.

In the system control part 207 of the recording-reproducing apparatus RC-k, the determination at step Sa9 in FIG. 20 is "yes" upon distributing the replacement advertising information as the trigger, and the process progresses.

In this way, the recording-reproducing apparatus according to this embodiment receives the contents data into which the broadcasting station generation meta data a including at least the original advertising information indicating the advertisement substance and the advertisement attribute data a-3 indicating the attribute of the original advertising information are incorporated, and reproduces the contents data as well as records the received contents data in the main recording unit 205. In reproducing the contents data, the recording-reproducing apparatus RC-k determines whether or not replacement of the original advertising information included in the contents data is required, based on advertisement attribute data a-3 and other data, and downloads the replacement advertising information as well as replaces the original advertising information incorporated into the contents data with the replacement advertising information to reproduce the contents data, if it is determined that replacement of the original advertising information is required.

With this constitution, only when replacement of the original advertising information is required, the replacement advertising information to replace the original advertising information is downloaded, and the contents data after replacement is reproduced in the recording-reproducing apparatus RC-k. Therefore, with the recording-reproducing apparatus RC-k according to this embodiment, it is possible to make the appropriate propaganda-advertisement, thereby attaining the propaganda-advertisement effect intended by the sponsor, even when the original advertising information incorporated into the contents data recorded on the recording-reproducing apparatus RC-k is reproduced at inappropriate reproduction time.

Also, the recording-reproducing apparatus RC-k according to this embodiment receives the advertisement attribute data a-3 including at least one of the broadcast date and time of the contents data and the minimum looking and listening number of the contents data, and determines whether or not replacement of the original advertising information included in the contents data is required, based on the data a-3. That is, with this constitution, it is possible to set up the description substance of the advertisement attribute data a-3 while reflecting the intention of the sponsor at the time of broadcasting.

Moreover, the recording-reproducing apparatus RC-k according to this embodiment determines that the replacement of the original advertising information is required, if the replacement of original advertising information is permitted with the replacement possibility flag included in the advertisement attribute data a-3. With this constitution, only of the replacement of the original advertising information is permitted with the replacement possibility flag, the replacement of the original advertising information is performed, whereby the replacement of the original advertising information can be made to the wishes of the sponsor at the time of broadcasting.

Moreover, an advertising information distribution server in an advertising information distribution system having a recording-reproducing apparatus RC-k for reproducing the contents data by acquiring the replacement advertising information different from the original advertising information and replacing the original advertising information with the replacement advertising information in a certain case, while reproducing the contents data by receiving the contents data incorporating the original advertising information indicating the advertisement substance, the server comprising an advertising information DB 14 recording a plurality of replacement advertising information, and a meta data DB 15 recording the advertisement story pattern data indicating the advertisement substance corresponding to the replacement advertising information and corresponding to each of the replacement advertising information recorded in the advertising information DB14, wherein an acquirement device acquires the data b-2 that is the history information indicating the reproduction history of the contents data in the recording-reproducing apparatus RC-k and including the story pattern data indicating the contents substance corresponding to the contents data from the recording-reproducing apparatus RC-k receiving the contents data, and selects at least one replacement advertising information based on both the data b-2 and the advertisement story pattern data as well as distributing the selected replacement advertising information to the recording-reproducing apparatus RC-k. With this constitution, the replacement advertising information having the advertisement substance conforming to the user's preference is distributed from the management server CS to the recording-reproducing apparatus RC-k. Therefore, it is possible to draw the interest of the user who viewed the advertisement corresponding to the distributed replacement advertising information and attain the propaganda-advertisement effect intended by the sponsor.

Moreover, the management server CS according to this embodiment employs, as the advertisement story pattern data, the information indicating an appearance probability that at least one of a character and a setting location appearing on the advertisement corresponding to the replacement advertising information appears at any point of time in the advertisement, wherein at least replacement advertising information is selected based on both the story pattern data indicating an appearance probability that at least one of a character and a setting location appearing on the contents corresponding to the contents data appears at any point of time in the progress of a story of the contents and the advertisement story pattern data. With this constitution, since the replacement advertising information is selected based on the data objectively indicating the substance of the contents that is the story pattern data, the replacement advertising information is selected according to the user's preference.

Also, the management CS according to this embodiment calculates a difference between the appearance probability corresponding to the advertisement story pattern data and the appearance probability corresponding to the story pattern data, wherein the replacement advertising information is selected based on the difference. With this constitution, since the replacement advertising information is selected based on the objective criterion, the replacement advertising information is selected conforming to the user's preference.

Moreover, the management CS according to this embodiment is constituted to generate the data indicating the questionnaire substance for the advertisement substance of the advertising information and distribute the data to the recording-reproducing apparatus RC-k, and acquire the data corresponding to the questionnaire result answered by the user of the recording-reproducing apparatus RC-k in accordance with the data. With this constitution, since the questionnaire result for each replacement advertising information is acquired, the questionnaire result is fed back to the sponsor.

In this embodiment, the number of reproducing each advertising information is written in the advertisement replacement-investigation data b-1-2, and the reproduction mode is decided in accordance with the number of reproduction. More specifically, the recording-reproducing apparatus RC-k according to this embodiment sets the reproduction mode to the replacement mode, if the number of reproduction exceeds the minimum looking and listening number. However, thenumber of reproducing each advertising information may be written for each user in the advertisement replacement-investigation data b-1-2 and managed for each user. In this case, when the contents data is reproduced in the recording-reproducing apparatus RC-k, the number of reproduction corresponding to the user ID inputted by the user is greater than the minimum looking and listening number, the reproduction mode may be set to the replacement mode.

Also, in this embodiment, the additional information is added to every frame of the contents data broadcast by the broadcasting installation BE. However, this additional information may be added to every plural frames, every cut or every scene, if there is no change in the dramatis personae or location in consecutive frames. Employing this constitution, it is required that the information such as "no change from frame f1 to frame f30", for example, is appended to the additional information. And in generating the story pattern data, the same counter t(ij) may be incremented from frame f1 to frame f30.

Moreover, in this embodiment, the management server CS and the broadcasting installation BE may be connected via the private line LL. However, both of themmay be communicated via the public digital network ISN.

Moreover, though in this embodiment, the advertisement story pattern data stored in the advertisement story pattern DB152 of the management server CS is generated by the replacement advertising information distribution part 112 of the management server CS, when the replacement advertising information istransmittedfrom the broadcastinginstallation BE, this advertisement story pattern data may be generated in advance in the broadcasting installation BE, and transmitted together with the replacement advertising information to the management server CS.

Further, the data formats of the broadcasting station generation meta data a and the system generation meta data b are only illustrative, but other data formats may be employed as far as the information implementing the above constitution is included.

Further, in this embodiment, the replacement advertising information is downloaded from the management server CS by the recording-reproducing apparatus RC-k, prior to reproduction of the contents data. However, the replacement advertising information may be downloaded in real time in reproducing the contents data, or downloaded in advance. When the replacement advertising information is downloaded in real time, the processings at step Sa8 to step Sa10 are not performed, but the same processings may be performed at step Sa15.

Also, in this embodiment, the story pattern data is configured in a unit of scene. However, the story pattern data may be generated in a unit of contents.

Further, the recording-reproducing apparatus RC-k is connected to the public digital network ISN, and makes data communication via the public digital network ISN. However, a radio communication function may be mounted in the network I/F part 202 of the recording-reproducing apparatus RC-k to make data communication via the radio communication network.

Further, though in this embodiment, the replacement advertising information distribution part 112 of the management server CS decides the replacement advertising information to be distributed to the recording-reproducing apparatus RC-k, the same processing operation may be performed by comprising a recording medium recording a program that defines the operation of the procedure and a computer and reading the program in the computer.

Further, in this embodiment, the recording-reproducing apparatus RC-k receives the broadcast wave, and records the contents data incorporating the original advertising information contained in the broadcast wave in the main recording unit 205. However, the contents data may be distributed via the network such as the Internet to the recording-reproducing apparatus RC-k. In this case, the server for contents distribution may be provided in the system configuration to make the same procedure, as shown in FIG. 1.

[2] Second embodiment

An advertising information distribution system 1 according to a second embodiment has the same configuration as shown in FIG. 1. Accordingly, each component of FIG. 1 has the same configuration and performs the same operation as in the first embodiment, unless specifically noted.

The advertising information distribution system 1 according to this embodiment distributes the advertising information to grant a special favor to the user of the recording-reproducing apparatus RC-k, and increase the possibility of distributing the advertising information to the user. More specifically, points corresponding to the monetary value are given to the distribution of the replacement advertising information and the answer of questionnaire, and the service corresponding to the points is provided to the user of the recording-reproducing apparatus RC-k.

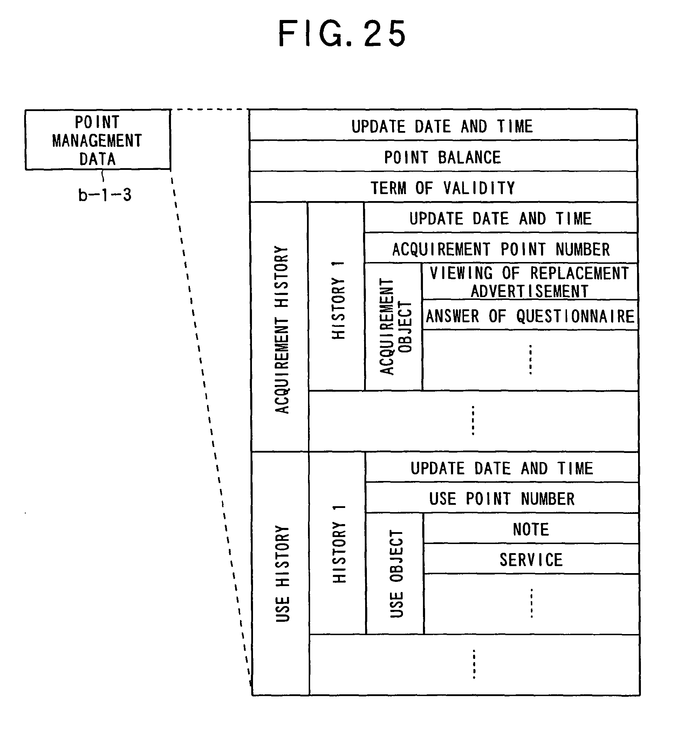

To implement this function, the system control part 207 of the recording-reproducing apparatus RC-k according to this embodiment generates, as the system generation meta data b, the point management data b-1-3, in addition to the data b-1-1, b-1-2, and b-2. FIG. 25 shows the data format of this point management data b-1-3. As shown in FIG. 25, the point management data b-1-3 in this embodiment includes the date and time of point update, point balance, point validity term, point acquirement history and point use history.

And the system control part 207 of the recording-reproducing apparatus RC-k updates the point management data b-1-3 in reproducing the contents data,

a) when the replacement advertising information is reproduced, and
b) when the user answers the questionnaire.

More specifically, in case of either a) or b), the system control part 207 increments the point balance of the point management data b-1-3 by a predetermined value to add to the point validity term, and the point acquirement history. In this way, every time the point management data b-1-3 is updated, the system control part 207 uploads the user ID and the point management data b-1-3 after update to the management server CS.

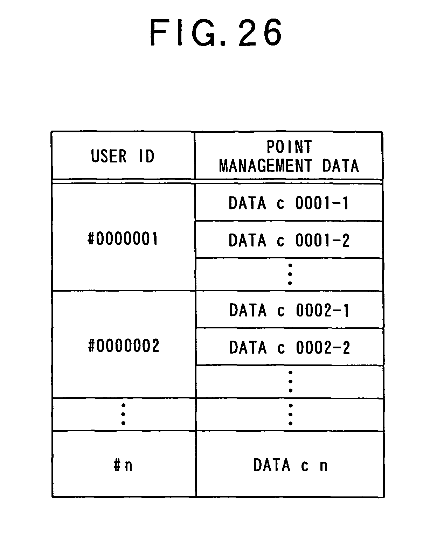

On the other hand, to manage the point management data b-1-3 uploaded from the recording-reproducing apparatus RC-k, a point management DB is provided in the meta data DB 15 of the management server CS. FIG. 26 shows one example of the recorded substance of this point management DB. As shown in FIG. 26, the point management data b-1-3 uploaded with the user ID is stored corresponding to the user ID in the point management DB of this embodiment.

If the point management data b-1-3 is uploaded from the recording-reproducing apparatus RC-k, the user management part 111 of the management server CS stores the data b-1-3 in the field corresponding to the user ID uploaded with the data b-1-3. Consequently, the point management data b-1-3 is shared between the recording-reproducing apparatus RC-k and the management server CS.

The advertisement agent as the owner of the management server CS provides various kinds of services to the user of the recording-reproducing apparatus RC-k, based on the points. It is arbitrary what service is provided to the user based on the points given to the user, but a gift corresponding to the number of points may be given, for example. Also, the advertisement agent as the owner of the management server CS may provide various kinds of services to the user, employing the points to accept the service.

In this way, the management server CS according to this embodiment stores the user ID for identifying the user of the recording-reproducing apparatus RC-k and the points corresponding to the monetary value to be associated with in the meta data DB15. When the data at least corresponding to the questionnaire result is acquired, the higher points in the monetary value than the points already recorded in the meta data DB15 are written in the meta data DB15. With this constitution, the points are added corresponding to each user ID, and the service in accordance with the points is provided to the user, whereby the withdrawal ratio of questionnaire answer is raised.

[2.1] Application example of second embodiment

The advertising information distribution system 1 of this application example has the same configuration as shown in FIG. 1. Accordingly, each component of FIG. 1 has the same configuration and performs the same operation as in the first embodiment unless specifically noted.

Herein, this application example is one service form of the advertising information distribution system according to the second embodiment, employing the points.

More specifically, this application example aims at providing the following services. That is, when the user of the recording-reproducing apparatus RC-k edits the contents data, the data indicating the edit substance is uploaded from the recording-reproducing apparatus RC-k to the management server CS. And each user downloads the data indicating the edit substance from the management server CS, employing the points, thereby utilizing the data. In this application example, the term "edit" as used herein means that the user inserts the chapter into the contents data, changes the order of reproducing the scenes, and creates the summary of the contents data.

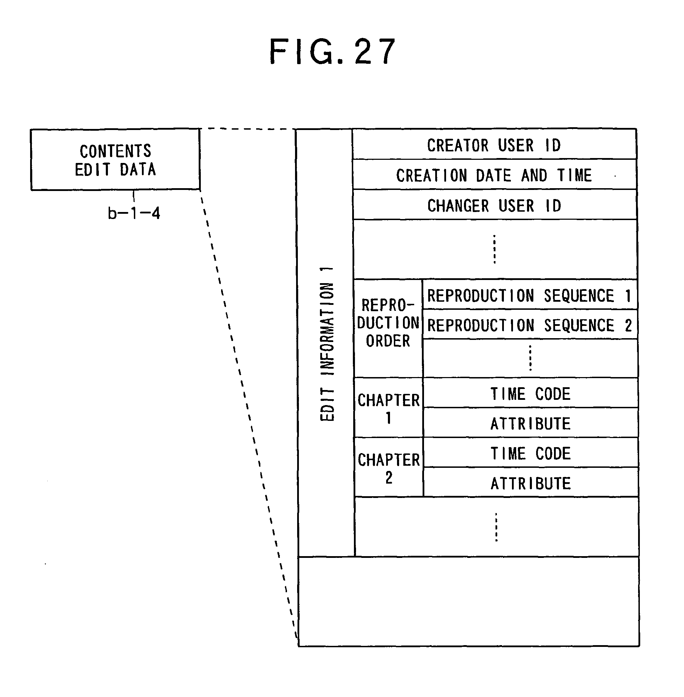

To implement this function, the system control part 207 of the recording-reproducing apparatus RC-k in this application example generates the contents edit data b-1-4 as a part of the system meta data b when generating the data b. Herein, the contents edit data b-1-4 means the data indicating the edit substance when the user of the recording-reproducing apparatus RC-k edits the contents data, and has the data format as shown in FIG. 27, for example.

When generating the system generation meta data b, no specific substance is written in the data b-1-4, and thereafter every time the user edits the contents data, the information indicating its edit substance is added.

Though the substance added to the contents edit data b-1-4 is arbitrary, the user ID of the user who edits the contents data, the attribute of chapter inserted by the user, the time code, and the reproduction order of scenes included in the contents data are added, as shown in FIG. 27.

The contents edit data b-1-4 is employed for controlling the reproduction of the contents data in reproducing the contents data. For example, when the contents edit data b-1-4 includes the reproduction order of the contents data, the contents data is reproduced in that order.

When the user edits the contents data, the system control part 207 of the recording-reproducing apparatus RC-k according to this embodiment uploads the contents edit data b-1-4 after update to the management server CS, if the contents edit data b-1-4 is updated. At this time, the system control part 207 appends the user ID corresponding to the user who edits the contents data to the data b-1-4.

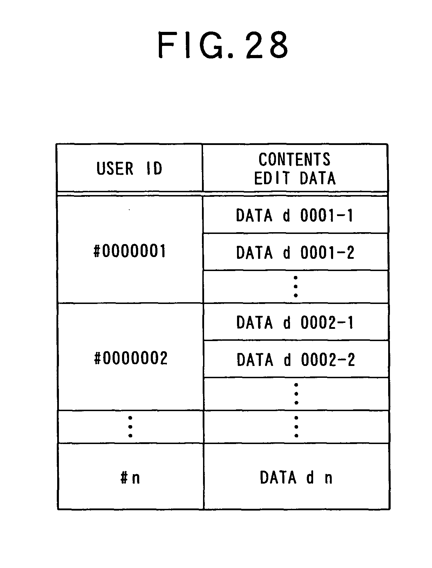

On the other hand, if the contents edit data b-1-4 is uploaded, the user management part 111 of the management server CS stores the contents edit data b-1-4 in the contents edit DB as shown in FIG. 28. At this time, the user management part 111 stores the contents edit data b-1-4 in the field corresponding to the user ID. And the user management part 111 distributes the contents edit data b-1-4 stored in the contents edit DB in response to a distribution request from the recording-reproducing apparatus RC-k. Thereby, the advertising information distribution system 1 according to this embodiment allows the edit substance of the contents data that is made by one user to be shared among all the users.

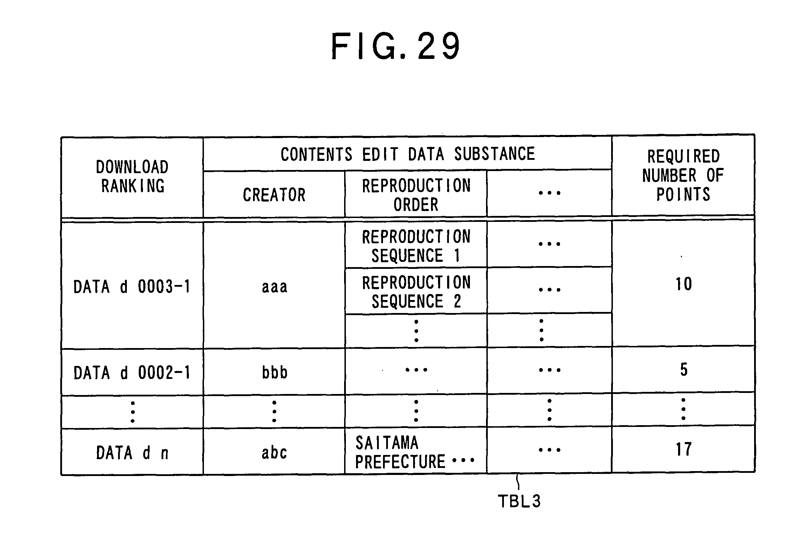

Also, the system control part 11 of the management server CS records a management table TBL3 as shown in FIG. 29 on the EEPROM, not shown, to manage the contents edit data b-1-4. As shown in FIG. 29, the management table TBL3 stores the substance of each contents edit data b-1-4, download ranking of the data b-1-4, and the number of points required for downloading. This table TBL3 is updated by adding to the field, every time the contents edit data b-1-4 is uploaded from the recording-reproducing apparatus RC-k.

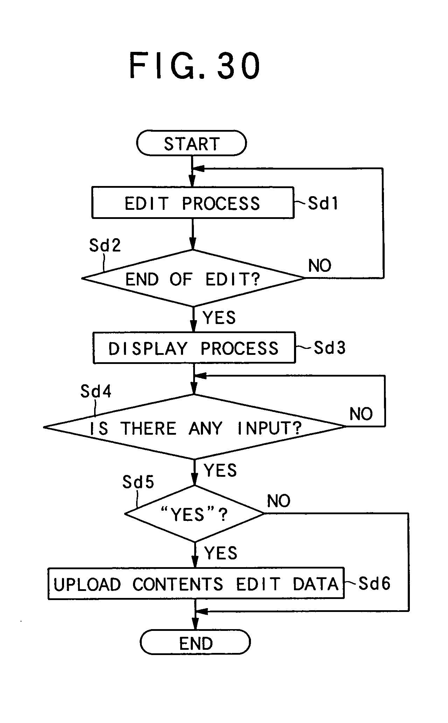

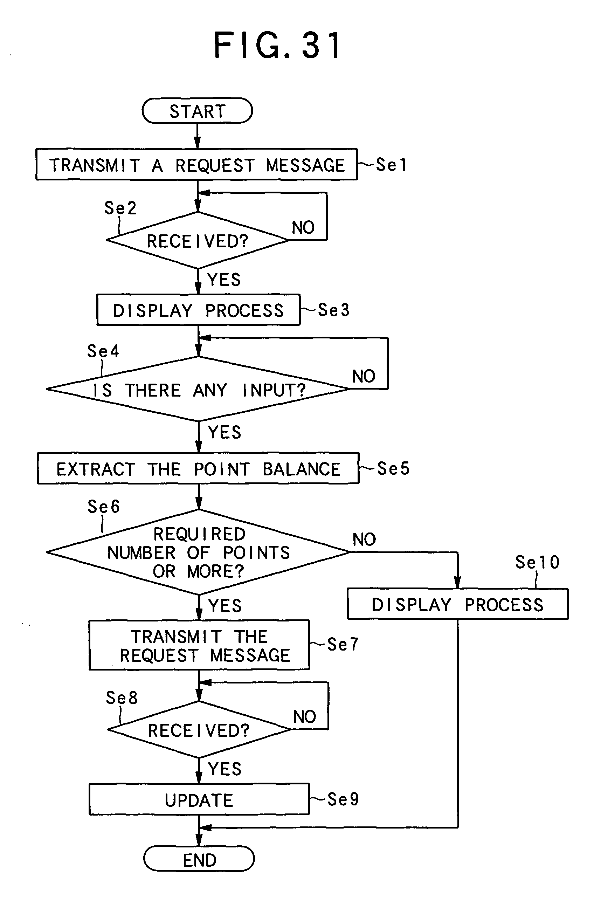

Referring to FIGS. 30 and 31, the operation of editing the contents data and the operation of receiving the contents edit data b-1-4 distributed in this embodiment will be described below.

(1) Edit operation of contents

When editing the contents data recording in the main recording unit 205 of the recording-reproducing apparatus RC-k, the user needs to perform a predetermined operation on the user I/F part 203. Though the operation is arbitrary, the user may depress an edit button provided on the operation part, not shown, in the user I/F part 203, to perform the following procedure.

When this operation is performed, the system control part 207 prompts the user to input the user ID and the password to decide the editor and determines whether or not the input user ID and password are matched with the user ID and password recorded in the table recording part 206. And if the user ID and password are matched, the system control part 207 produces the image data corresponding to a screen for enabling the user to select the edit object, and outputs it to the decoder 210. Consequently, a selection screen for selecting the edit object is displayed on the monitor M. In this state, the user may perform the input operation for selecting the contents data to be edited. The configuration of the selection screen is arbitrary. For example, a list of contents titles included in the broadcasting station generation meta data a may be displayed.

In this state, if the user performs the input operation for deciding the edit object to the user I/F part 203, the system control part 207 performs a contents data editing process as shown in FIG. 30, in accordance with an input signal sent from the user I/F part 203.

In this procedure, the system control part 207, first of all, performs an editing process (step Sd1), and continues the processings at both steps until the edit of the contents data is ended ("no" at step Sd2). At step Sd1, the system control part 207 updates the data b-1-4 by adding the information indicating the edit substance corresponding to the input operation performed by the user to the user I/F part 203 to the contents edit data b-1-4. A specific edit substance is arbitrary as described above.

Thereafter, if the edit of the contents data by the user is ended, the system control part 207 produces the image data including the character string such as "Uploading the edit substance?", for example, and supplies it to the decoder 210 (step Sd3), and is kept waiting for the input from the user (step Sd4). Consequently, the image corresponding to the image data is displayed on the monitor M.

In this state, if the user inputs an instruction of inhibiting the upload to the user I/F part 203, the system control part 207 makes the determination "yes" at step Sd4, and then makes the determination "no" at step Sd5, whereby the procedure is ended without uploading the contents edit data b-1-4.

On the contrary, if the user inputs an instruction of permitting the upload to the user I/F part 203, the system control part 207 makes the determination "yes" at step Sd4, and then makes the determination "yes" at step Sd5. Consequently, the system control part 207 uploads the contents edit data b-1-4 after update with the user ID appended to the management server CS (step Sd6), and ends the procedure.

On the other hand, if the contents edit data b-1-4 is uploaded, the user management part 111 of the management server CS stores the data b-1-4 in the contents edit DB and updates the management table TBL3.

(2) Operation of receiving the distributed contents edit data b-1-4

When the contents edit data b-1-4 is downloaded, it is required that the user inputs the self user ID to the user I/F part 203, and inputs an instruction of downloading the contents edit data b-1-4. The system control part 207 of the recording-reproducing apparatus RC-k performs a procedure as shown in FIG. 31 with the inputs as the trigger.

In this procedure, the system control part 207 transmits a request message to the management server CS (step Se1), and is kept waiting for receiving a response message (step Se2).

If this request message is received, the user management part 111 of the management server CS generates the HTML data indicating the substance of the management table TBL3, and returns the HTML data as the response message. At this time, the user management part 111 designates the URL indicating the storage location of each contents edit data in the HTML data with anchor.

With the receiving of the HTML data as a momentum, the system control part 207 of the recording-reproducing apparatus RC-k performs the processing at step Se3, and is kept waiting for the input from the user (step Se4). That is, the system control part 207 processes the HTML data, and supplies it to the decoder 210, thereby displaying the image corresponding to the HTML data on the monitor M (step Se3). Consequently, the image indicating the substance of the management table TBL3 is displayed on the monitor M.

In this state, if the user inputs an instruction of selecting the contents edit data b-1-4 to the user I/F part 203, the system control part 207 makes the determination "yes" at step Se4, and extracts the point balance of the user from the point management data b-1-3 (step Se5). Then, the system control part 207 determines whether or not the point balance exceeds the necessary number of points for the contents edit data b-1-4 specified by the user (step Se6).

As a result of this determination, if the determination is "no", the system control part 207 produces the image data including the character string such as "Can not download this data. and supplies it to the decoder 210 (step Se10), whereby the procedure is ended.

On the contrary, if the determination is "yes" at step Se6, the system control part 207 extracts the URL corresponding to the contents edit data b-1-4 selected by the user, and transmits a request message with the URL added (step Se7). Then, the system control part 207 is kept waiting for receiving the response message (step Se8).

On the contrary, if this message is received, the user management part 111 of the management server CS specifies the contents edit data b-1-4 desired by the user from the URL appended to the message and returns the contents edit data b-1-4 to the recording-reproducing apparatus RC-k.

In this way, if the contents edit data b-1-4 is returned, the system control part 207 updates the contents edit data b-1-4 recorded on the meta data recording part 204, based on the contents edit data b-1-4, and updates the point balance of the point management data b-1-4 (step Se9), whereby the procedure is ended.

As a result of performing the series of processings, the recording-reproducing apparatus RC-k can reproduce the contents data based on the contents edit data b-1-4.

In this way, the recording-reproducing apparatus RC-k of this application example edits the contents data, generates the contents edit data b-1-4 indicating the substance of the edit, and transmits the contents edit data b-1-4 to the management server CS. Also, the management server CS of this application example acquires the contents data edit data b-1-4 generated in the recording-reproducing apparatus RC-k, and records the acquired contents edit data b-1-4. With this constitution, the contents edit data b-1-4 is shared among all the recording-reproducing apparatuses RC-k accommodated within the advertising information distribution system 1, allowing the unitary management of the contents edit data b-1-4 to be made.

Moreover, the recording-reproducing apparatus RC-k of this application example downloads the contents edit data b-1-4 from the management server CS. Therefore, the contents edit data b-1-4 generated in other recording-reproducing apparatuses RC-k can be utilized.

Moreover, the management server CS of this application example records relationally the user ID for identifying the user of the recording-reproducing apparatus RC-k and the points corresponding to the monetary value in the meta data DB15. When the data at least corresponding to the questionnaire result is acquired, the higher points in the monetary value than the points already recorded in the meta data DB15 are written. When the contents edit data b-1-4 is distributed, the lower points in the monetary value than the points already recorded in the meta data DB15 are written. With this constitution, the withdrawal ratio of questionnaire answer is raised, and a new service form of distributing the contents edit data b-1-4 is implemented.

Though in this application example, the contents edit data is uploaded without adding to the points, the contents edit data may be uploaded by adding to the points.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and range of equivalency of the claims are therefore intended to be embraced therein.

**Claims**

1. An information recording-reproducing terminal unit, **characterized in that** the information recording-reproducing terminal unit comprises:

   a receiving device (201) which receives the contents data incorporating at least the first advertising information indicating the advertisement substance and the first advertisement attribute information indicating an attribute of the first advertising information;
   a contents data recording device (205) which records the contents data received by the receiving device;
   a reproduction device (207) which reproduces the contents data recorded in the contents data recording device;
   a determination device (207) which determines whether or not replacement of the first advertising information included in the contents data is required, based on at least one attribute information of the first advertisement attribute information incorporated into the contents data and the user attribute information indicating the attribute of the user on a self machine in reproducing the contents data; and
   an advertising information acquirement device (207) which acquires the second advertising information different from the first advertising information from the outside, when the determination device determines that replacement of the first advertising information is required;

   wherein when the determination device (207) determines that replacement of the first advertising information is required, and when the second advertising information is acquired by the advertising information acquirement device (207) , the reproduction device (207) reproduces the contents data by replacing the first advertising information incorporated into the contents data with the second advertising information.

2. The information recording-reproducing terminal unit according to claim 1, **characterized in that** the receiving device receives at least one of the broadcast date and time of the contents data and the minimum number of reproducing the contents data as the first advertisement attribute information, and the determination device determines whether or not replacement of the first advertising information included in the contents data is required, based on at least one of the first advertisement attribute information and the attribute information indicating the attribute of the user on the self machine.

3. The information recording-reproducing terminal unit according to claim 1, **characterized in that** the first advertisement attribute information includes the replacement possibility information indicating whether or not to replace the first advertising information, and the determination device determines that replacement of the first advertisement data is required when replacement of the first advertising information is permitted based on the replacement possibility information.

4. The information recording-reproducing terminal unit according to claim 1, **characterized in that** the information recording-reproducingterminalunitfurthercomprisesanedit data generation device (207) for generating the edit data indicating the substance of the edit by editing the contents data, and an edit data transmitting device (202) for transmitting the edit data to the outside.

5. The information recording-reproducing terminal unit according to claim 4, **characterized in that** the information recording-reproducing terminal unit further comprises an edit data acquirement device (202) for acquiring the edit data from the outside.

**6.** An advertising information distribution server in an advertising information distribution system having an information recording-reproducing terminal unit which reproduces the contents data by receiving the contents data incorporating the first advertising information indicating the advertisement substance, while acquiring the second advertising information different from the first advertising information and replacing the first advertising information with the second advertising information in certain cases, **characterized in that** the server further comprises:

a first recording device (DB14) which records a plurality of second advertising information;
a second recording device (DB15) which records the advertisement substance information indicating the advertisement substance corresponding to the second advertising information and corresponding to each of the second advertising information recorded in the first recording device;
an acquirement device (11) which acquires the history information indicating the reproduction history of the contents data in the information recording-reproducing terminal unit and including the contents substance information indicating the contents substance corresponding to the contents data from the information recording-reproducing terminal unit receiving the contents data;
a selection device (11) which selects at least one of the second advertising information based on both the history information and the advertisement substance information; and
an advertising information distribution device(11) which distributes the second advertising information selected by the selection device to the information recording-reproducing terminal unit.

**7.** The advertising information distribution server according to claim 6, **characterized in that** the second recording device (DB15) records, as the advertisement substance information, the information indicating an appearance probability that at least one of a character and a setting location appearing on the advertisement corresponding to the second advertising information appears at any point of time in the advertisement, and the acquirement device acquires, as the contents substance information included in the history information, the information indicating an appearance probability that at least one of a character and a setting location appearing on the contents corresponding to the contents data appears at any point of time in the progress of a story of the contents, and the selection device selects at least one of the second advertising information based on both the history information and the advertisement substance information.

**8.** The advertising information distribution server according to claim 7, **characterized in that** the selection device (11) calculates a difference between the appearance probability corresponding to the contents substance information included in the history information and the appearance probability included in the advertisement substance information, and selects the second advertising information based on the difference.

**9.** The advertising information distribution server according to claim 6, **characterized in that** the server further comprises:

a questionnaire data distribution device (11) which generates the questionnaire data indicating the questionnaire substance for the advertisement substance of the second advertising information and distributing the questionnaire data to the information recording-reproducing terminal unit; and
a result data acquirement device (11) which acquires the result data corresponding to a questionnaire result answered by the user of the information recording-reproducing terminal unit in accordance with the questionnaire data.

**10.** The advertising information distribution server according to claim 9, **characterized in that** the server further comprises:

a third recording device (15) which records relationally the identification information for identifying the user of the information recording-reproducing terminal unit and the point data corresponding to a monetary value; and
a point data writing device (15) which writes in the third recording device the point data having a higher monetary value than the point data already recorded in the third recording device, when at least the result data is acquired.

**11.** The advertising information distribution server according to claim 6, **characterized in that** the server further comprises:

an edit data acquirement device (11) which acquires the edit data indicating the edit substance of the contents data generated in the information recording-reproducing terminal unit; and

a fourth recording device (15) which records the edit data.

**12.** The advertising information distribution server according to claim 11, **characterized in that** the server further comprises an edit data distribution device (11) which distributes the edit data to the information recording-reproducing terminal unit.

**13.** The advertising information distribution server according to claim 12, **characterized in that** the server further comprises:

a third recording device (15) which records relationally the identification information for identifying the user of the information recording-reproducing terminal unit and the point data corresponding to a monetary value;
a first point data writing device (15) which writes in the third recording device the point data having a higher monetary value than the point data already recorded in the third recording device, when at least the result data is acquired; and
a second point data writing device (15) which writes in the third recording device the point data having a lower monetary value than the point data already recorded in the third recording device, when the edit data is distributed.

**14.** An advertising information distribution system including an advertising information distribution server accommodated in a network and an information recording-reproducing terminal unit, **characterized in that** the system comprises:

the information recording-reproducing terminal unit comprises:

a receiving device which receives the contents data incorporating at least the first advertising information indicating the advertisement substance and the first advertisement attribute information indicating an attribute of the first advertising information;
a contents data recording device which records the contents data received by the receiving device;
a reproduction device which reproduces the contents data recorded in the contents data recording device;
a determination device which determines whether or not replacement of the first advertising information included in the contents data is required, based on at least one attribute information of the first advertisement attribute information incorporated into the contents data and the user attribute information indicating the attribute of the user on a self machine in reproducing the contents data; and
an advertising information acquirement device which acquires the second advertising information different from the first advertising information from the advertising information distribution server when the determination device determines that replacement of the first advertising information is required;

wherein when the determination device determines that replacement of the first advertising information is required, and when the second advertising information is acquired by the advertising information acquirement device, the reproduction device reproduces the contents data by replacing the first advertising information incorporated into the contents data with the second advertising information; and
the advertising information distribution server comprises an advertising information recording device which records a plurality of second advertising information different from the first advertising information, and an advertising information distribution device which distributes the second advertising information to the information recording-reproducing terminal unit for recording and reproducing the information.

**15.** The advertising information distribution system according to claim 14, **characterized in that** the advertising information distribution server further comprises an advertisement substance information recording device which records the advertisement substance information indicating the advertisement substance corresponding to the second advertising information and corresponding to each of the second advertising information recorded in the first recording device, a history information acquirement device which acquires the history information indicating the reproduction history of the contents data in the information recording-reproducing terminal unit and including the contents substance information indicating the contents substance corresponding to the contents data from the information recording-reproducing terminal unit receiving the contents data, and a selection device which selects at least one of the second advertising information based on both the history information and the advertisement substance information, and wherein the advertising information distribution device distributes the second advertising information selected by the selection device to the information recording-reproducing terminal unit.

**16.** The advertising information distribution system according to claim 15, **characterized in that** the advertisement substance information recording device records, as the advertisement substance information, the information indicating an appearance probability that at least one of a character and a setting location appearing on the advertisement corresponding to the second advertising information appears at any point of time in the advertisement, the history information acquirement device acquires, as the contents substance information included in the history information, the information indicating an appearance probability that at least one of a character and a setting location appearing on the contents corresponding to the contents data appears at any point of time in the progress of a story of the contents, and the selection device selects at least one of the second advertising information based on both the history information and the advertisement substance information.

**17.** An advertising information distribution method for distributing the advertising information indicating the advertisement substance to an information recording-reproducing terminal unit in a system including an advertising information distribution server accommodated in a network and the information recording-reproducing terminal unit, the method comprising:

a receiving process of receiving the contents data incorporating at least the first advertising information indicating the first advertisement substance and the first advertisement attribute information indicating an attribute of the first advertising information in the information recording-reproducing terminal unit;

a contents data recording process of recording the contents data received at the receiving process in the information recording-reproducing terminal unit; and

a reproduction process of reproducing the contents data recorded at the contents data recording process in the information recording-reproducing terminal unit;

the reproduction process further comprising:

a determination process of determining whether or not replacement of the first advertising information included in the contents data is required, based on at least one attribute information of the first advertisement attribute information incorporated into the contents data to be reproduced and the user attribute information indicating an attribute of the user on a self machine in the information recording-reproducing terminal unit;

a transmission process of transmitting an acquirement request of the second advertising information different from the first advertising information to the advertising information distribution server, when it is determined at the determination process that replacement of the first advertising information is required, in the information recording-reproducing terminal unit;

a distribution process of distributing the second advertising information upon the acquirement request transmitted at the transmission process in the advertising information distribution server; and

a replacement reproduction process for reproducing the contents data by replacing the distributed second advertising information with the first advertising information incorporated into the contents data to be reproduced, when the second advertising information is distributed at the distribution process, in the information recording-reproducing terminal unit.

**18.** An information record medium in which a contents data reproduction program is recorded in a readable way by a computer included in an information recording-reproducing terminal unit, the contents data reproduction program causing the computer to function as:

a receiving device which receiving the contents data incorporating at least the first advertising information indicating the advertisement substance and the first advertisement attribute information indicating an attribute of the first advertising information;

a write device which writes the contents data received by the receiving device in a recording medium;

a reproduction device for reproducing the contents data recorded in the recording medium;

a determination device which determines whether or not replacement of the first advertising information included in the contents data is required, based on at least one attribute information of the first advertisement attribute information incorporated into the contents data and the user attribute information indicating an attribute of the user on a self machine in reproducing the contents data; and

an advertising information acquirement device which acquires the second advertising information different from the first advertising information from the outside, when the determination device determines that replacement of the first advertising information is required;

wherein when the determination device determines that replacement of the first advertising information is required, and when the second advertising information is acquired by the advertising information acquirement device, the reproduction device reproduces the contents data by replacing the first advertising information incorporated into the contents data with the second advertising information.

**19.** An information record medium in which an advertising information distribution program is recorded in a readable way by a computer included in an advertising information distribution apparatus, the advertising information distribution program causing the computer to function as:

an advertisement substance information acquirement device which acquires the advertisement substance information indicating the advertisement substance corresponding to the second advertising information;
a history information acquirement device which acquires the history information indicating the reproduction history of the contents data in the information recording-reproducing terminal unit and including the contents substance information indicating the contents substance corresponding to the contents data from the information recording-reproducing terminal unit receiving the contents data;
a selection device which selects at least one of the second advertising information based on both the history information and the advertisement substance information; and
an advertising information distribution device which distributes the second advertising information selected by the selection device to the information recording-reproducing terminal unit.

# FIG. 1

BROADCASTING INSTALLATION — BE

MANAGEMENT SERVER — CS

LL

1

RECORDING-REPRODUCING APPARATUS — Rc-n

RECORDING-REPRODUCING APPARATUS — Rc-2

RECORDING-REPRODUCING APPARATUS — Rc-1

NS

# FIG. 2

| | FIGURE 1 | FIGURE 2 | FIGURE 3 | FIGURE 4 | ··· | FIGURE j | ··· | FIGURE n |
|---|---|---|---|---|---|---|---|---|
| FIGURE 1 | t(11) | t(21) | t(31) | t(41) | ··· | t(j1) | ··· | t(n1) |
| FIGURE 2 | t(12) | t(22) | t(32) | t(42) | ··· | t(j2) | ··· | t(n2) |
| FIGURE 3 | t(13) | t(23) | t(33) | t(43) | ··· | t(j3) | ··· | t(n3) |
| FIGURE 4 | t(14) | t(24) | t(34) | t(44) | ··· | t(j4) | ··· | t(n4) |
| ⋮ | ⋮ | ⋮ | ⋮ | ⋮ | ⋮ | ⋮ | ⋮ | ⋮ |
| FIGURE j | t(1j) | t(2j) | t(3j) | t(4j) | ··· | t(jj) | ··· | t(nj) |
| ⋮ | ⋮ | ⋮ | ⋮ | ⋮ | ⋮ | ⋮ | ⋮ | ⋮ |
| FIGURE n | t(1n) | t(2n) | t(3n) | t(4n) | ··· | t(jn) | ··· | t(nn) |

TBL1

EP 1 536 362 A1

FIG. 3

FIG. 4

# FIG. 5

| | LOCATION 1 | LOCATION 2 | LOCATION 3 | LOCATION 4 | · · · | LOCATION j | · · · | LOCATION n |
|---|---|---|---|---|---|---|---|---|
| LOCATION 1 | tp(11) | tp(21) | tp(31) | tp(41) | · · · | tp(j1) | · · · | tp(n1) |
| LOCATION 2 | tp(12) | tp(22) | tp(32) | tp(42) | · · · | tp(j2) | · · · | tp(n2) |
| LOCATION 3 | tp(13) | tp(23) | tp(33) | tp(43) | · · · | tp(j3) | · · · | tp(n3) |
| LOCATION 4 | tp(14) | tp(24) | tp(34) | tp(44) | · · · | tp(j4) | · · · | tp(n4) |
| ⋮ | ⋮ | ⋮ | ⋮ | ⋮ | ⋮ | ⋮ | ⋮ | ⋮ |
| LOCATION j | tp(1j) | tp(2j) | tp(3j) | tp(4j) | · · · | tp(jj) | · · · | tp(nj) |
| ⋮ | ⋮ | ⋮ | ⋮ | ⋮ | ⋮ | ⋮ | ⋮ | ⋮ |
| LOCATION n | tp(1n) | tp(2n) | tp(3n) | tp(4n) | · · · | tp(jn) | · · · | tp(nn) |

TBL2

# FIG. 6

| FIGURE INFORMATION | NAME |
| | AGE |
| | MALE/FEMALE |
| | OCCUPATION |
| LOCATION INFORMATION | |
| MELODY INFORMATION | |
| GENRE INFORMATION | |

| IMAGE DATA |
| AUDIO DATA |
| ADDITIONAL INFORMATION |

| FRAME1 |
| FRAME2 |
| ⋮ |
| FRAMEn |

| CUT1 |
| CUT2 |
| ⋮ |
| CUT3 |

| SCENE1 |
| ORIGINAL ADVERTISING INFORMATION1 |
| SCENE2 |
| ORIGINAL ADVERTISING INFORMATION2 |
| ⋮ |
| SCENEn |

| CONTENTS DATA |
| BROADCASTING STATION GENERATION META DATA |

a

EP 1 536 362 A1

# FIG. 7

| | | | | |
|---|---|---|---|---|
| BROADCASTING STATION GENERATION META DATA | | | | |
| a | | | | |

| | | | | |
|---|---|---|---|---|
| BROADCASTING STATION GENERATION META DATA | BROADCAST MAIN DATA | BROADCAST DATE AND TIME | | a-1 |
| | | BROADCAST ch | | |
| | | CONTENTS TITLE | | |
| | | PERFORMER | | |
| | | GENRE | | |
| | | SUMMARY | | |
| | BROADCAST SCENE DATA | SCENE 1 | TIME CODE | a-2 |
| | | | DRAMATIS PERSONAE 1 | ROLE NAME |
| | | | | AGE |
| | | | | MALE/FEMALE |
| | | | DRAMATIS PERSONAE 2 | ROLE NAME |
| | | | | AGE |
| | | | | MALE/FEMALE |
| | | | LOCATION | PLACE NAME |
| | | | | BACKGROUND |
| | | | | TIME |
| | | | | WEATHER |
| | | | BGM | |
| | | ⋮ | | |
| | ADVERTISEMENT ATTRIBUTE DATA | REPLACEMENT POSSIBILITY FLAG | | a-3 |
| | | MINIMUM LOOKING AND LISTENING NUMBER | | |
| | | ADVERTISE-MENT 1 | ADVERTISEMENT DATA ID | |
| | | | TIME CODE | |
| | | ⋮ | | |

# FIG. 8

M

DECODER — 210

Rc-k

209
c
a   b

| 205 | 206 | 207 | 208 |
|---|---|---|---|
| MAIN RECORDING UNIT | TABLE RECORDING PART | SYSTEM CONTROL PART | ADVERTISING INFORMATION RECORDING UNIT |

211

| TV RECEIVING PART | NETWORK I/F PART | USER I/F PART | META DATA RECORDING PART |
|---|---|---|---|
| 201 | 202 | 203 | 204 |

ISN

EP 1 536 362 A1

# FIG. 9

```
┌─────────────────┐                    ┌──────────────────────┐  ┐
│     SYSTEM      │      b-1-1~        │     TITLE DATA       │  │
│   GENERATION    │- - - - - - - - - - ├──────────────────────┤  ├ b-1
│   META DATA     │      b-1-2~        │    ADVERTISEMENT     │  │
└─────────────────┘                    │    REPLACEMENT-      │  │
         │                             │  INVESTIGATION DATA  │  ┘
         b                             ├──────────────────────┤  ┐
                                       │      SCENE 1         │  │
                                       ├──────────────────────┤  │
                                       │      SCENE 2         │  │
                                       ├──────────────────────┤  ├ b-2
                                       │         ⋮            │  │
                                       ├──────────────────────┤  │
                                       │      SCENE n         │  │
                                       └──────────────────────┘  ┘
```

# FIG.10

| TITLE DATA |
|---|

b−1−1

| RECORD -1ST | USER ID |
|---|---|
| | RECORDING DATE AND TIME |
| ERASER | USER ID |
| | ERASE DATE AND TIME |
| | ERASE DISCRIMINATION |
| REPRODUCER 1 | USER ID |
| | PASSWORD |
| | AGE |
| | ⋮ |
| | ⋮ |

# FIG.11

| ADVERTISEMENT REPLACEMENT-INVESTIGATION DATA |
| --- |

b-1-2

| | | | |
| --- | --- | --- | --- |
| ADVERTISEMENT1 | ORIGINAL | ADVERTISEMENT ID | |
| | | STORY PATTERN | |
| | | TIME CODE | |
| | | REPRODUCTION DATE AND TIME | |
| | | REPRODUCTION NUMBER | |
| | REPLACEMENT1 | ADVERTISEMENT ID | |
| | | STORY PATTERN | |
| | | TIME CODE | |
| | | REPLACEMENT DATE AND TIME | |
| | REPLACEMENT2 | | |
| | | | |
| | | | |
| | | | |
| | ⋮ | | |
| ADVERTISE-MENT2 | ⋮ | | |
| | | | |

# FIG.12

# FIG.13

EP 1 536 362 A1

# FIG.14

| ADVERTISEMENT ID | REPLACEMENT ADVERTISING INFORMATION | DATA SIZE | ADVERTISEMENT META DATA |
|---|---|---|---|
| CM000001 | REPLACEMENT ADVERTISING INFORMATION 1 | 90Byte | meta_CM000001 |
| CM000002 | REPLACEMENT ADVERTISING INFORMATION 2 | 100Byte | meta_CM000002 |
| ⋮ | ⋮ | ⋮ | ⋮ |
| CMn | REPLACEMENT ADVERTISING INFORMATION n | 110Byte | meta_CMn |

# FIG.15

| ADVERTISEMENT META DATA | | |
|---|---|---|

| | | |
|---|---|---|
| | ADVERTISEMENT ID | |
| | FILE NAME | |
| | VIDEO SIZE | |
| | CREATION DAY | |
| | DELIVERY DAY | |
| | TERM OF VALIDITY | |
| | TIME LENGTH | |
| | GENRE | |
| | CATEGORY | |
| REPLACEMENT OBJECT | ADVERTISEMENT ID 1 | |
| | ADVERTISEMENT ID 2 | |
| | ADVERTISEMENT ID 3 | |
| | ⋮ | |
| DISTRIBUTION HISTORY 1 | APPARATUS ID | |
| | USER ID | |
| | DISTRIBUTION DATE AND TIME | |
| | ⋮ | |
| DISTRIBUTION HISTORY 2 | APPARATUS ID | |
| | USER ID | |
| | DISTRIBUTION DATE AND TIME | |
| | ⋮ | |
| | ⋮ | |

# FIG.16

| USER ID | USER INFORMATION | | | DATA b-2 |
| | NAME | ADDRESS | ··· | |
|---------|------|---------|-----|----------|
| #0000001 | aaa | TOKYO ··· | ··· | DATA a 0001-1 |
| | | | | DATA a 0001-2 |
| | | | | ⋮ |
| #0000002 | bbb | OSAKA ··· | ··· | DATA a 0002 |
| ⋮ | ⋮ | ⋮ | ⋮ | ⋮ |
| #n | abc | SAITAMA PREFECTURE ··· | ··· | DATA a n |

# FIG.17

| USER ID | ADVERTISEMENT REPLACEMENT- INVESTIGATION DATA | QUESTIONNAIRE DATA |
|---|---|---|
| #0000001 | DATA b 0001-1 | an000001-1 |
| | DATA b 0001-2 | an000001-2 |
| | ⋮ | ⋮ |
| #0000002 | DATA b 0002-1 | an000002-1 |
| | DATA b 0002-2 | an000002-2 |
| | ⋮ | ⋮ |
| ⋮ | ⋮ | ⋮ |
| #n | DATA b n | an n |

# FIG.18

| ADVERTISEMENT ID | STORY PATTERN |
|:---:|:---:|
| CM000001 | mat0001 |
| CM000002 | mat0002 |
| ⋮ | ⋮ |
| CMn | matn |

# FIG.19

START

S1 IS THERE ANY INPUT? — NO

YES

RECORDING RESERVATION — S2

S3 IS IT RECORDING RESERVATION DATE AND TIME? — NO

YES

RECORD CONTENTS DATA IN THE MAIN RECORDING UNIT AND META DATA IN THE META DATA RECORDING PART — S4

S5 END OF RECORDING? — NO

YES

GENERATE THE STORY PATTERN DATA — S6

GENERATE THE SYSTEM GENERATION META DATA AND RECORD IT IN THE META DATA RECORDING PART — S7

UPLOAD THE SYSTEM GENERATION META DATA — S8

END

# FIG. 20

```
                    ( START )
                        │
                        ▼
┌───────────────────────────────────────────────┐
│ EXTRACT THE REPLACEMENT POSSIBILITY FLAG AND   │──Sa1
│ THE MINIMUM LOOKING AND LISTENING NUMBER       │
└───────────────────────────────────────────────┘
                        │
         Sa2            ▼
          ◇─────────────────────◇ ──── YES ─────────┐
          ◇     NORMAL MODE?     ◇                   │
          ◇─────────────────────◇                   │
                        │ NO                         │
                        ▼                            │
              ┌─────────────────────┐                │
              │ SET REPRODUCTION MODE│──Sa4          │
              │ TO REPLACEMENT MODE  │               │
              └─────────────────────┘                │
                        │                            │
         NO             ▼                            │
    ◇────────────────────────────────◇ Sa5          │
    ◇     IS THERE ANY                ◇              │
    ◇     REPLACEMENT ADVERTISING     ◇              │
    ◇ INFORMATION ALREADY DOWNLOADED? ◇              │
    ◇────────────────────────────────◇              │
     │                  │ YES                        │
     │         ┌──────────────────────────────┐      │
     │         │ EXTRACT THE REPRODUCTION NUMBER OF │──Sa6
     │         │ REPLACEMENT ADVERTISING INFORMATION│  │
     │         └──────────────────────────────┘      │
     │                  │                            │
     │        ◇────────────────────◇ Sa7            │
     │  YES   ◇ IS REPRODUCTION     ◇                │
     │ ◄──────◇ NUMBER GREATER THAN ◇                │
     │        ◇ OR EQUAL TO THE MINIMUM◇             │
     │        ◇ LOOKING AND LISTENING ◇             │
     │        ◇     NUMBER?          ◇               │
     │        ◇────────────────────◇                │
Sa8  │                  │ NO                         │
┌──────────┐            │              Sa3           │
│ TRANSMIT A│           │         ┌─────────────────┐│
│ REQUEST MESSAGE│      │         │ SET REPRODUCTION││
└──────────┘            │         │ MODE TO NORMAL MODE│
     │                  │         └─────────────────┘│
Sa9  ▼                  │                 │          │
 ◇─────────◇ NO         │                 │          │
 ◇ RECEIVED?◇───┐       │                 │          │
 ◇─────────◇    │       │                 │          │
     │ YES      │       │                 │          │
     ▼     Sa10 │       │                 │          │
┌──────────────┐│       │                 │          │
│ RECORD THE RECEIVED│  │                 │          │
│ REPLACEMENT ADVERTISING│                │          │
│ INFORMATION  ││       │                 │          │
└──────────────┘│       │                 │          │
     │          │       │                 │          │
     └──────────┴───────┴─────────────────┴──────────┘
                        │
                        ▼
              ┌──────────────────┐
              │ START REPRODUCING │──Sa11
              │ THE CONTENTS DATA │
              └──────────────────┘
                        │
                        ▼
                      ( A )
```

# FIG. 21

(A)

Sa12
IS REPRODUCTION POINT OF ORIGINAL ADVERTISING INFORMATION REACHED? — NO

YES

Sa13
REPRODUCTION MODE?

REPLACEMENT — NORMAL

Sa15
CONTROL THE REPLACEMENT OF ADVERTISING INFORMATION

Sa14
UPDATE THE REPRODUCTION NUMBER OF ORIGINAL ADVERTISING INFORMATION IN THE ADVERTISEMENT REPLACEMENT- INVESTIGATION DATA OF META DATA

UPDATE THE REPRODUCTION NUMBER OF REPLACEMENT ADVERTISING INFORMATION IN THE ADVERTISEMENT REPLACEMENT- INVESTIGATION DATA OF META DATA

Sa16

Sa17
DOES REPRODUCTION REACH THE END POINT? — NO

YES

(B)

# FIG. 22

B

DISPLAY PROCESS — Sa18

Sa19 — IS THERE ANY INPUT? — NO

YES

NO — "YES"? — Sa20

YES

TRANSMIT A REQUEST — Sa21

DISPLAY PROCESS — Sa22

Sa23 — END OF QUESTIONNAIRE? — NO

YES

UPDATE ADVERTISEMENT REPLACEMENT-INVESTIGATION DATA — Sa24

DISPLAY PROCESS — Sa25

Sa26 — IS THERE ANY INPUT? — NO

YES

NO — "YES"? — Sa27

YES

UPLOAD QUESTIONNAIRE DATA — Sa28

END

# FIG. 23

```
        ( START )
            │
            ↓ ←──────────────────┐
   ┌─────────────────────┐       │
   │ UPDATE THE REPRODUCTION │ ~Sb1 │
   │  HISTORY OF DATA b-2  │       │
   └─────────────────────┘       │
            │                    │
            ↓                    │
Sb2                          NO  │
        ╱     END OF     ╲ ──────┘
        ╲  REPRODUCTION? ╱
            │
            ↓ YES
   ┌─────────────────────┐
   │  DISPLAY PROCESS    │ ~Sb3
   └─────────────────────┘
            │
            ↓ ←──────────────────┐
Sb4                          NO  │
        ╱ IS THERE ANY INPUT? ╲ ─┘
            │
            ↓ YES
Sb5                          NO
        ╱    "YES"?    ╲ ──────────┐
            │                      │
            ↓ YES                  │
   ┌─────────────────────┐         │
   │  UPLOAD DATA b-2    │ ~Sb6    │
   └─────────────────────┘         │
            │ ←───────────────────┘
            ↓
        ( END )
```

# FIG. 24

```
                    START

        EXTRACT USER ID AND          ~Sc1
        ADVERTISEMENT ID

          READ DATA b-2               ~Sc2

      GENERATE STORY PATTERN DATA      ~Sc3

    READ ADVERTISEMENT STORY PATTERN DATA   ~Sc4

        COMPARISON PROCESS            ~Sc5

    SELECT ADVERTISEMENT STORY PATTERN
    DATA IN THE ORDER IN WHICH CA      ~Sc6
    VALUE AND CB VALUE ARE SMALLER

        READ REPLACEMENT             ~Sc7
      ADVERTISING INFORMATION

          DISTRIBUTION               ~Sc8

                    END
```

# FIG. 25

| POINT MANAGEMENT DATA |
| --- |
| b-1-3 |

| | | | UPDATE DATE AND TIME |
| --- | --- | --- | --- |
| | | | POINT BALANCE |
| | | | TERM OF VALIDITY |
| ACQUIREMENT HISTORY | HISTORY 1 | | UPDATE DATE AND TIME |
| | | | ACQUIREMENT POINT NUMBER |
| | | ACQUIREMENT OBJECT | VIEWING OF REPLACEMENT ADVERTISEMENT |
| | | | ANSWER OF QUESTIONNAIRE |
| | | | ⋮ |
| | ⋮ | | |
| USE HISTORY | HISTORY 1 | | UPDATE DATE AND TIME |
| | | | USE POINT NUMBER |
| | | USE OBJECT | NOTE |
| | | | SERVICE |
| | | | ⋮ |
| | ⋮ | | |

# FIG. 26

| USER ID | POINT MANAGEMENT DATA |
|---------|----------------------|
| #0000001 | DATA c 0001-1 |
| | DATA c 0001-2 |
| | ⋮ |
| #0000002 | DATA c 0002-1 |
| | DATA c 0002-2 |
| | ⋮ |
| ⋮ | ⋮ |
| #n | DATA c n |

# FIG. 27

| CONTENTS EDIT DATA |
|---|

b-1-4

| EDIT INFORMATION 1 | CREATOR USER ID | |
|---|---|---|
| | CREATION DATE AND TIME · | |
| | CHANGER USER ID | |
| | ⋮ | |
| | REPRO- DUCTION ORDER | REPRODUCTION SEQUENCE 1 |
| | | REPRODUCTION SEQUENCE 2 |
| | | ⋮ |
| | CHAPTER 1 | TIME CODE |
| | | ATTRIBUTE |
| | CHAPTER 2 | TIME CODE |
| | | ATTRIBUTE |
| | ⋮ | |
| | | |

# FIG. 28

| USER ID | CONTENTS EDIT DATA |
|---|---|
| #0000001 | DATA d 0001-1 |
| | DATA d 0001-2 |
| | ⋮ |
| #0000002 | DATA d 0002-1 |
| | DATA d 0002-2 |
| | ⋮ |
| ⋮ | ⋮ |
| # n | DATA d n |

# FIG. 29

| DOWNLOAD RANKING | CONTENTS EDIT DATA SUBSTANCE | | | REQUIRED NUMBER OF POINTS |
|---|---|---|---|---|
| | CREATOR | REPRODUCTION ORDER | ・・・ | |
| DATA d 0003-1 | aaa | REPRODUCTION SEQUENCE 1 | ・・・ | 10 |
| | | REPRODUCTION SEQUENCE 2 | ・・・ | |
| | | ⋮ | ⋮ | |
| DATA d 0002-1 | bbb | ・・・ | ・・・ | 5 |
| ⋮ | ⋮ | ⋮ | ⋮ | ⋮ |
| DATA d n | abc | SAITAMA PREFECTURE ・・・ | ・・・ | 17 |

TBL3

# FIG. 30

```
              ( START )
                  │
                  ▼◄──────────────┐
        ┌──────────────────┐      │
        │   EDIT  PROCESS  │─ Sd1 │
        └──────────────────┘      │
                  │               │
  Sd2             ▼               │
        ╱◄─────────────────╲  NO  │
       ◄   END  OF  EDIT?   ►─────┘
        ╲─────────────────╱
                  │
                  ▼ YES
        ┌──────────────────┐
        │  DISPLAY PROCESS │─ Sd3
        └──────────────────┘
                  │
  Sd4             ▼◄──────────────┐
        ╱◄─────────────────────╲  NO
       ◄  IS THERE ANY INPUT?   ►──┘
        ╲─────────────────────╱
                  │
  Sd5             ▼ YES
           ╱◄───────╲   NO
          ◄  "YES"?  ►─────────────┐
           ╲───────╱               │
                  │                │
                  ▼ YES            │
   ┌────────────────────────────┐  │
   │ UPLOAD CONTENTS EDIT DATA │─ Sd6
   └────────────────────────────┘  │
                  │◄───────────────┘
                  ▼
              ( END )
```

# FIG. 31

```
                      ( START )
                          │
                          ▼
    ┌──────────────────────────────────────┐
    │ TRANSMIT A REQUEST MESSAGE │──Se1
    └──────────────────────────────────────┘
                          │
                          ▼ ◄──────────────────┐
  Se2                                          │
         ╱◄──────────────────╲      NO         │
        ◄     RECEIVED?        ►──────────────┘
         ╲────────────────────╱
                          │ YES
                          ▼
    ┌────────────────────────┐
    │   DISPLAY  PROCESS  │──Se3
    └────────────────────────┘
                          │
                          ▼ ◄──────────────────┐
  Se4                                          │
         ╱◄──────────────────────╲    NO       │
        ◄   IS THERE ANY INPUT?    ►──────────┘
         ╲────────────────────────╱
                          │ YES
                          ▼
    ┌──────────────────────────────────────┐
    │ EXTRACT THE POINT BALANCE  │──Se5
    └──────────────────────────────────────┘
                          │
                          ▼
  Se6
         ╱◄──────────────────╲
        ◄      REQUIRED        ╲    NO
        ◄ NUMBER OF POINTS      ►──────────┐
        ◄    OR MORE?          ╱           │
         ╲────────────────────╱            ▼
                          │ YES     ┌──────────────────┐  Se10
                          ▼         │ DISPLAY PROCESS │
    ┌────────────────────────┐      └──────────────────┘
    │    TRANSMIT THE      │──Se7          │
    │  REQUEST MESSAGE   │                 │
    └────────────────────────┘             │
                          │ ◄──────────┐   │
                          ▼            │   │
  Se8                                  │   │
         ╱◄──────────────╲    NO       │   │
        ◄   RECEIVED?     ►───────────┘    │
         ╲───────────────╱                 │
                          │ YES            │
                          ▼                │
    ┌────────────────────────┐             │
    │        UPDATE        │──Se9          │
    └────────────────────────┘             │
                          │ ◄──────────────┘
                          ▼
                      ( END )
```

**European Patent Office**

# EUROPEAN SEARCH REPORT

Application Number

EP 04 02 6800

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 99/66719 A (WEBTV NETWORKS, INC) 23 December 1999 (1999-12-23) * abstract * * page 5, line 16 - page 6, line 26 * * page 9, line 3 - line 31 * * page 10, line 9 - line 16 * * page 11, line 2 - line 6 * * page 11, line 26 - page 12, line 13 * * page 13, line 7 - page 14, line 2 * * page 14, line 26 - line 30 * * page 15, line 30 - line 31 * * page 16, line 11 - line 23 * * page 21, line 18 - page 22, line 8 * * page 22, line 16 - page 23, line 19 * * page 24, line 21 - page 25, line 5 * * figures 1,3-5,7,8 * ----- | 1-19 | G06F17/60 H04N7/173 |
| X | PRAMATARIS K C ET AL: "PERSONALIZED INTERACTIVE TV ADVERTISING: THE IMEDIA BUSINESS MODEL" EM, HOCHSCHULE ST. GALLEN, INSTITUT FUR WIRTSCHAFTSINFORMATIK,, CH, vol. 11, no. 1, 2001, pages 17-25, XP001031546 ISSN: 1019-6781 * page 19, right-hand column, line 20 - line 27 * * page 20, right-hand column, line 1 - line 9 * * page 20, right-hand column, line 28 - line 34 * * page 21, left-hand column, line 7 - line 47 * * figure 1 * ----- -/-- | 1-19 | **TECHNICAL FIELDS SEARCHED (Int.Cl.7)** G06F H04N |

The present search report has been drawn up for all claims

| Place of search | Date of completion of the search | Examiner |
|---|---|---|
| The Hague | 23 February 2005 | Rossier, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

**European Patent Office**

## EUROPEAN SEARCH REPORT

Application Number

EP 04 02 6800

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 02/33970 A (OPENTV, CORP; CONRAD, CLAY; DELPUCH, ALAIN; DUREAU, VINCENT; ZDEPSKI,) 25 April 2002 (2002-04-25) <br> * abstract * <br> * page 3, line 3 - line 7 * <br> * page 4, line 11 - line 27 * <br> * page 7, line 1 - line 7 * <br> * page 7, line 33 - page 8, line 29 * <br> * page 9, line 17 - page 10, line 18 * <br> * figures 3,7,8 * <br> ----- | 1-19 | |
| X | US 2002/083445 A1 (FLICKINGER GREGORY C ET AL) 27 June 2002 (2002-06-27) <br> * abstract * <br> * page 2, paragraph 19 * <br> * page 3, paragraph 21 * <br> * page 3, paragraph 28 - paragraph 30 * <br> ----- | 1-19 | |

TECHNICAL FIELDS SEARCHED (Int.Cl.7)

The present search report has been drawn up for all claims

| Place of search | Date of completion of the search | Examiner |
|---|---|---|
| The Hague | 23 February 2005 | Rossier, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

# EP 1 536 362 A1

## ANNEX TO THE EUROPEAN SEARCH REPORT
## ON EUROPEAN PATENT APPLICATION NO.

EP 04 02 6800

This annex lists the patent family members relating to the patent documents cited in the above-mentioned European search report.
The members are as contained in the European Patent Office EDP file on
The European Patent Office is in no way liable for these particulars which are merely given for the purpose of information.

23-02-2005

| Patent document cited in search report | | Publication date | Patent family member(s) | | Publication date |
|---|---|---|---|---|---|
| WO 9966719 | A | 23-12-1999 | US | 6698020 B1 | 24-02-2004 |
| | | | AU | 4681999 A | 05-01-2000 |
| | | | CA | 2335201 A1 | 23-12-1999 |
| | | | EP | 1118213 A1 | 25-07-2001 |
| | | | JP | 2002518946 T | 25-06-2002 |
| | | | WO | 9966719 A1 | 23-12-1999 |
| WO 0233970 | A | 25-04-2002 | WO | 0233970 A1 | 25-04-2002 |
| | | | AU | 1047801 A | 29-04-2002 |
| | | | CA | 2426995 A1 | 25-04-2002 |
| | | | EP | 1327356 A1 | 16-07-2003 |
| US 2002083445 | A1 | 27-06-2002 | AU | 8699801 A | 13-03-2002 |
| | | | WO | 0219581 A1 | 07-03-2002 |
| | | | US | 2002083435 A1 | 27-06-2002 |
| | | | US | 2002072966 A1 | 13-06-2002 |
| | | | US | 2002026638 A1 | 28-02-2002 |
| | | | US | 2002083444 A1 | 27-06-2002 |
| | | | US | 2002083442 A1 | 27-06-2002 |
| | | | US | 2002083439 A1 | 27-06-2002 |
| | | | US | 2002083443 A1 | 27-06-2002 |
| | | | US | 2002083441 A1 | 27-06-2002 |
| | | | US | 2001032333 A1 | 18-10-2001 |
| | | | US | 2002087975 A1 | 04-07-2002 |
| | | | US | 2002056107 A1 | 09-05-2002 |
| | | | US | 2002144263 A1 | 03-10-2002 |